(19) Europäisches Patentamt
European Patent Office
Office européen des brevets

(11) EP 0 948 566 B1

(12) # FASCICULE DE BREVET EUROPEEN

(45) Date de publication et mention de la délivrance du brevet:
**29.05.2002 Bulletin 2002/22**

(21) Numéro de dépôt: **97953966.5**

(22) Date de dépôt: **29.12.1997**

(51) Int Cl.[7]: **C08K 5/55**, C09K 3/10, C08L 83/06

(86) Numéro de dépôt international:
**PCT/FR97/02443**

(87) Numéro de publication internationale:
**WO 98/29498 (09.07.1998 Gazette 1998/27)**

(54) **UTILISATION DE COMPOSITIONS SILICONES RETICULABLES PAR VOIE CATIONIQUE SOUS UV ET D'UN PHOTOAMORCEUR DU TYPE BORATE D'ONIUM, POUR LES REVETEMENTS DE JOINTS PLATS, NOTAMMENT DE JOINTS DE CULASSE**

VERWENDUNG VON UNTER EINFLUSS VON UV-LICHT UND BORATONIUM-PHOTOINITIATOREN KATIONISCH HÄRTENDEN SILIKONZUSAMMENSETZUNGEN ZUR HERSTELLUNG VON FLACHDICHTUNGEN,INSBESONDERE VON ZYLINDERKOPFDICHTUNGEN

USE OF SILICONE COMPOSITIONS CROSS-LINKABLE BY CATIONIC PROCESS UNDER UV RADIATION AND OF AN ONIUM BORATE TYPE PHOTOINITIATOR FOR COATING FLAT JOINTS, PARTICULARLY CYLINDER HEAD GASKETS

(84) Etats contractants désignés:
**AT BE CH DE DK ES FI FR GB GR IE IT LI LU NL PT SE**

(30) Priorité: **30.12.1996 FR 9616378**

(43) Date de publication de la demande:
**13.10.1999 Bulletin 1999/41**

(73) Titulaire: **RHODIA CHIMIE**
**92408 Courbevoie Cédex (FR)**

(72) Inventeurs:
- **COTTING, Marie-Christine**
**F-69500 Bron (FR)**
- **JOUBERT, Gérard**
**F-38780 Pont Evêque (FR)**
- **LOUBET, Olivier**
**F-69003 Lyon (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**EP-A- 0 539 234**
**EP-A- 0 562 922**
**EP-A- 0 614 958**
**EP-A- 0 703 236**
**FR-A- 2 727 416**

EP 0 948 566 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

Le domaine de la présente invention est celui des compositions silicones à base de polyorganosiloxanes (POS) organofonctionnels réticulables par voie cationique, sous l'effet d'une activation obtenue par l'intermédiaire de rayonnements UV et éventuellement par l'intermédiaire d'énergie thermique.

Plus précisément, l'invention concerne l'utilisation de telles compositions pour le traitement de joints plats, notamment pour imprégner ou vernir les joints de culasse (cylinder head gasket) des moteurs à explosion.

En particulier, il s'agit de réaliser à l'aide de ces compositions réticulables par voie cationique sous UV e.g., des imprégnations de joints plats (joints de culasse) et/ou des revêtements anti-adhésifs à l'interface bloc/moteur/culasse de moteurs thermiques, ladite interface étant de préférence le joint de culasse en lui-même.

Les compositions silicones utilisées à cette fin n'étaient pas jusqu'alors des compositions silicones réticulables par voie cationique sous UV.

Le fonctionnement d'un moteur à explosion nécessite une forte cohésion des pièces fixes, une lubrification intime des pièces mobiles et un refroidissement efficace de l'ensemble bloc-moteur. Le joint de culasse joue un double rôle ; il assure la cohésion de l'ensemble démontable bloc-moteur/culasse ainsi que l'étanchéité des circulations croisées du liquide de refroidissement (eau additionnée de glycol et d'agents alcalins), de l'huile et des gaz en cours de combustion.

Les joints de culasse peuvent être des matériaux composites très élaborés comprenant une âme métallique en tôle finement perforée, un carton (de préférence sans amiante) composé de fibres organiques et de charges minérales, des sertissures des anneaux de feu s'ouvrant sur la chambre d'explosion, un trottoir en élastomère silicone pour circonscrire les fuites possibles sur la surface.

Les joints de culasse peuvent également être constitués simplement d'une ou plusieurs feuilles métalliques éventuellement recouverte(s) d'un revêtement élastomère caoutchouc NBR ou élastomère fluoré du type Viton (Cf par exemple JP-A-082 09 113).

Généralement, les joints de culasse subissent préalablement à leur emploi deux types de traitement à l'aide de silicones :

- 1 - un traitement d'imprégnation destiné à remplir les vides afin d'hydrofuger le carton et améliorer sa tenue thermique,
- 2 - ainsi qu'un traitement de vernissage destiné à abaisser le coefficient de frottement du joint et induire une bonne anti-adhérence.

Outre ces traitements, on dépose également, par sérigraphie, sur les joints de culasse, un trottoir en élastomère silicone.

L'imprégnation des joints de culasse par des silicones réticulés est recommandée dans le cas où le support est poreux. Cela permet d'assurer l'étanchéité vis-à-vis des différents fluides du fonctionnement du moteur (huiles, essences, fuel, liquide de refroidissement, gaz de combustion). L'imprégnation procure par ailleurs au joint, une certaine compressibilité, qui lui est nécessaire lors de l'écrasement qu'il subit à l'occasion du resserage de la culasse.

Lors du démontage de la culasse, le joint doit s'enlever très facilement sans adhérer aux surfaces de la culasse. Il est donc impératif que les deux faces du joint soient anti-adhérentes et c'est là l'un des rôles essentielles du vernissage par des compositions silicones réticulées. Le vernissage au silicone participe à l'étanchéification mais aussi à la protection du joint vis-à-vis d'une dégradation éventuelle pendant le fonctionnement du moteur, (contrainte mécanique : cisaillement et/ou contrainte thermique : échauffement/refroidissement).

Les imprégnants et vernis classiquement utilisés sont des compositions constituées d'huiles ou de résines silicones de faible viscosité, comportant des groupements fonctionnels SiOH ou SiH ((US-A-4 720 316 ; EP-A-272 382), SiVinyl (DE-A-3 731 032 ; US-A-4 499 135), ou de mélanges d'une huile ou résine silicone comportant des groupements fonctionnels SiH et d'une huile ou résine silicone comportant des groupements fonctionnels SiVinyle (DE-A-3 718 559 ; EP-A-471 979 ; DE-A-3 544 740), capables de réticuler à température élevée (généralement supérieure à 100°C) en présence d'un catalyseur métallique tel que les sels d'étain, de titane, de zirconium, de platine ou d'un peroxyde.

Les compositions à base d'huiles ou de résines silicones comportant des groupements fonctionnels SiOH, SiH, SiVinyle ou SiH/SiVinyle présentent généralement au moins un des inconvénients suivants :

- le mélange constitué par la matrice silicone et le catalyseur est instable à température ambiante (surtout en l'absence de solvant), cette instabilité se traduisant par une augmentation de viscosité, voire par une gélification du bain d'imprégnation ou de vernissage, ce qui nécessite un fréquent remplacement du bain d'imprégnation ou de vernissage ou un traitement en deux étapes ; par exemple les brevets US-A-4 720 316 et EP-A-272 382 préconisent la mise en oeuvre du catalyseur lors de la fabrication du carton, puis imprégnation du carton séché par une

huile silicone à groupements SiH ;

- il est souvent nécessaire de disperser le mélange silicone + catalyseur dans un solvant organique afin d'augmenter la stabilité et diminuer la viscosité dudit mélange ; il en découle les inconvénients liés à l'utilisation de solvants (toxicité, prévoir des dispositifs de sécurité, de recyclage du solvant...)
- le prix de revient des matières premières est élevé, notamment dans le cas des huiles ou des résines vinylées associées éventuellement à des huiles ou résines à fonctions SiH et à un catalyseur au platine ; ces mélanges peuvent être très stables à température ambiante, notamment en présence d'un inhibiteur du platine, mais sont onéreux du fait de la mise en oeuvre d'huiles ou de résines vinylées.

Dans la quête d'une nouvelle composition silicone pour le traitement de joints de culasse, ayant pour objectif de perfectionner les compositions connues sus-visées (demande de brevet français RHONE-POULENC sur les joints de culasse N° 2 697 532), il a été proposé d'utiliser une composition silicone réticulable par hydrosilylation et contenant un POS $\alpha,\omega$-diOH, un POS à motif SiH du type PMHS ainsi que de l'éthynylcyclohexanol, ce dernier composé permettant de former des résines à fonction silanol ; le ratio SiH / SiOH du POS concerné étant de l'ordre de 10/1 à 30/1, la composition comprenant également un catalyseur de polyaddition du type Karstedt.

Même si une telle composition amène effectivement des améliorations, sur le plan de la stabilité, de la réactivité et de la souplesse d'emploi, il n'en reste pas moins que la réticulation propre à ce type de composition comporte une étape contraignante de chauffage à température élevée (160°C) pendant 5 à 10 minutes. Une telle étape est particulièrement pénalisante quant à la productivité d'un procédé industriel de traitement ou de revêtement de joints de culasse à l'aide de silicones. Il peut ainsi être, par exemple, nécessaire de recourir à l'utilisation d'appareillages sophistiqués et coûteux tels que de long tunnels de chauffage. Il apparaît donc que ces compositions silicones réticulables par polyaddition et utilisées pour le revêtement de joints de culasse n'apporte pas encore une solution entièrement satisfaisante au problème de la réalisation d'imprégnation et de traitement silicone de joints de culasse, qui répondent aux spécifications d'anti-adhérence et de compressibilité, de même qu'aux exigences de productivité et de rentabilité pour les productions à grande échelle.

La demande de brevet français N° 2 722 203 est relative à l'application d'un revêtement fluorosilicone réticulable sur un joint de culasse. Un tel revêtement est obtenu à partir d'une composition silicone réticulable sous l'effet de la chaleur, des UV ou d'un faisceau d'électrons, par hydrosilylation. Cette composition comprend un fluorosilicone vinylé, un POS porteur de motifs SiH, un catalyseur d'hydrosilylation au platine, un catalyseur de condensation du type peroxyde et éventuellement un solvant du type solvant halogéné, esteracétone. Le support sur lequel est susceptible d'être appliquée cette composition est décrit comme étant de préférence de nature silicone. Ce revêtement est plus spécifiquement destiné à réduire l'imperméabilité vis à vis de l'huile des joints de culasse. Il s'agit d'un revêtement relativement épais : 0,1 - 10 mm, qui se caractérise par un temps de réticulation relativement long (plusieurs minutes) et qui ne peut s'affranchir d'une activation par la chaleur pour la réticulation, même dans les cas où l'on utilise des UV. Ce revêtement connu n'est donc pas lui non plus satisfaisant en ce qui concerne les exigences liées à la production industrielle à grande échelle. Par ailleurs, le fait que la réticulation de cette composition fluorosilicone soit fondée sur un mécanisme d'hydrosilylation SiH/SiVi pose des problèmes de stabilité.

Le brevet américain N° 5 260 348 décrit également une composition silicone réticulable sous UV, selon un mécanisme de condensation. Une telle composition est utile pour la préparation de revêtement anti-adhérent (« release coating ») notamment pour joints de culasse. Cette composition comprend un POS $\alpha,\omega$-diOH du type polydiméthylsiloxane ou polydifluoroalkylsiloxane, un agent de réticulation du type méthyl ou éthyltriacétoxysilane ou méthyltribenzoxysilane, et un photoamorceur formé par un sel d'onium (iodonium) dont le contranion est $BF_4^-$ ou $SbF_6^-$. Ces compositions silicones réticulables sous UV par condensation ne peuvent s'affranchir d'une activation thermique complémentaire pour obtenir des durées de réticulation raisonnables. Il va de soi que cela complique le procédé industriel.

Le contre-anion le plus performant pour la réticulation sous UV, est le $SbF_6^-$, mais il se trouve qu'il présente l'inconvénient majeur d'être toxique.

Force est donc de constater qu'en l'état actuel de la technique, il n'existe pas de composition silicone réticulable parfaitement bien adaptée aux exigences de l'application spécifique comme imprégnation et/ou revêtement de joints plats et en particulier de joints de culasse. Les spécifications attendues pour l'imprégnation et le vernissage de joints de culasse qui sont notamment, l'étanchéification, la compressibiiité, l'antiadhérence, la stabilité, la facilité d'emploi et de préparation, ne sont pas satisfaites par les compositions silicones réticulables connues à ce jour.

Dans cet état de connaissances, l'un des objectifs essentiels de la présente invention est de mettre à jour une composition silicone réticulable pour l'imprégnation et le vernissage de joints plats, notamment de joints de culasse, qui remédient aux carences de l'art antérieur et en particulier qui offrent un procédé d'application et de préparation / réticulation du revêtement silicone qui soit rapide, qui ne nécessite pas d'équipements sophistiqués, ni de hautes températures et qui permette d'obtenir un revêtement de vernissage suffisamment anti-adhérent et doué de propriétés mécaniques convenables.

Un autre objectif essentiel de la présente invention est de trouver une composition silicone réticulable pour

l'imprégnation et/ou le vernissage de joints plats notamment de joints de culasse, qui soit stable au stockage, économique et qui ne fasse pas intervenir de solvants toxiques.

Un autre objectif de la présente invention est de fournir un procédé de revêtement d'un joint plat notamment d'un joint de culasse, par imprégnation et/ou vernissage, à l'aide d'une composition silicone réticulable, ce procédé se devant d'être facile à mettre en oeuvre, d'être économique, rapide et de conduire à un joint de culasse siliconé, qui soit anti-adhérent et performant dans son environnement d'utilisation.

Un autre objectif essentiel de la présente invention est de fournir un joint plat et notamment un joint de culasse revêtu et/ou imprégné d'un silicone réticulé anti-adhérent et compressible, présentant toutes les spécifications attendues et évoquées ci-dessus, en matière de « processabilité » et de qualités intrinsèques du matériau.

Une fois ces objectifs fixés, la demanderesse a eu le mérite de trouver, après de nombreuses études et expérimentations que, de manière tout à fait surprenante et inattendue, il convient de sélectionner les compositions silicones réticulables par voie cationique, de préférence sous activation par rayonnement UV, dans lesquelles l'amorceur est un borate d'onium et/ou un borate de sels organométalliques ayant pour particularité d'avoir un contranion borate de nature tout à fait spécifique, notamment en ce qu'il comprend un atome de bore lié à au moins un radical phényle substitué par au moins un groupement électroattracteur. Au delà de cette sélection avantageuse de l'amorceur, la demanderesse a isolé une classe de POS porteur de groupements organofonctionnels de pontage ($G_{fp}$), réticulable par voie cationique - par exemple de type époxyde ou vinyléther - dans lesquels ces groupements $G_{fp}$ sont présents en quantité d'au moins 0.01 équivalent par kg de POS.

C'est ainsi que la présente invention concerne l'utilisation :

- pour la réalisation d'imprégnation(s) et/ou de revêtement(s) antiadhésif(s) mis en oeuvre à l'interface bloc moteur/culasse de moteurs et appliqué(s) sur des joints plats, notamment des joints de culasse,
- de compositions à base d'au moins un polyorganosiloxane (POS) réticulable par voie cationique - de préférence sous UV - et d'une quantité catalytique efficace d'au moins un sel amorceur (PA),

ladite utilisation étant caractérisée en ce que :

(i) le sel amorceur (PA) est formé par au moins un borate d'onium d'un élément des groupes 15 à 17 de la classification périodique [Chem. & Eng. News, vol 63, N° 5, 26 du 4 Février 1985] ou d'un complexe organométallique d'un élément des groupes 4 à 10 de la classification périodique (même référence),

☐ *l'entité cationique* dudit borate étant choisie parmi :

1) - les sels d'onium de formule (**I**) :

$$[(R^1)_n\text{-}A\text{-}(R^2)_m]^+ \qquad (\mathbf{I})$$

formule dans laquelle :

- A représente un élément des groupes 15 à 17 tel que par exemple I, S, Se, P ou N,
- $R^1$ représente un radical aryle carbocyclique ou hétérocyclique en $C_6$-$C_{20}$, ledit radical hétérocyclique pouvant contenir comme hétéroéléments de l'azote ou du soufre,
- $R^2$ représente $R^1$ ou un radical alkyle ou alkényle linéaire ou ramifié en $C_1$-$C_{30}$ ; lesdits radicaux $R^1$ et $R^2$ étant éventuellement substitués par un groupement alcoxy en $C_1$-$C_{25}$, alkyle en $C_1$-$C_{25}$, nitro, chloro, bromo, cyano, carboxy, ster ou mercapto,
- n est un nombre entier allant de 1 à v + 1, v étant la valence de l'élément A,
- m est un nombre entier allant de 0 à v - 1 avec n + m = v + 1,

2) - les sels d'oxoisothiochromanium décrits dans la demande de brevet **WO 90/11303**, notamment le sel de sulfonium du 2-éthyl-4-oxoisothiochromanium ou de 2-dodécyl-4-oxoisothio-chromanium ;

3) - les sels de sulfonium dans lesquelles l'entité cationique comprend :

→ 3.1. au moins une espèce polysulfonium de formule III.1.

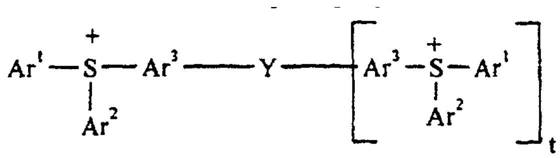 (III.1)

dans laquelle :

- les symboles $Ar^1$, qui peuvent être identiques ou différents entre-eux, représentent chacun un radical monovalent phényle ou naphtyle, éventuellement substitué avec un ou plusieurs radicaux choisis parmi : un radical alkyle linéaire ou ramifié en $C_1$-$C_{12}$, de préférence en $C_1$-$C_6$, un radical alkoxy linéaire ou ramifié en $C_1$-$C_{12}$, de préférence en $C_1$-$C_6$, un atome d'halogène, un groupe -OH, un groupe -COOH, un groupe ester -COO-alkyle où la partie alkyle est un reste linéaire ou ramifié en $C_1$-$C_{12}$, de préférence en $C_1$-$C_6$, et un groupement de formule -$Y^4$-$Ar^2$ où les symboles $Y^4$ et $Ar^2$ ont les significations données juste ci-après,
- les symboles $Ar^2$, qui peuvent être identiques ou différents entre eux ou avec $Ar^1$, représentent chacun un radical monovalent phényle ou naphtyle, éventuellement substitué avec un ou plusieurs radicaux choisis parmi : un radical alkyle linéaire ou ramifié en $C_1$-$C_{12}$, de préférence en $C_1$-$C_6$, un radical alkoxy linéaire ou ramifié en $C_1$-$C_{12}$, de préférence en $C_1$-$C_6$, un atome d'halogène, un groupe -OH, un groupe -COOH, un groupe ester -COO-alkyle où la partie alkyle est un reste linéaire ou ramifié en $C_1$-$C_{12}$, de préférence en $C_1$-$C_6$,
- les symboles $Ar^3$, qui peuvent être identiques ou différents entre eux, représentent chacun un radical divalent phénylène ou naphtylène, éventuellement substitué avec un ou plusieurs radicaux choisis parmi : un radical alkyle linéaire ou ramifié en $C_1$-$C_{12}$, de préférence en $C_1$-$C_6$, un radical alkoxy linéaire ou ramifié en $C_1$-$C_{12}$, de préférence en $C_1$-$C_6$, un atome d'halogène, un groupe -OH, un groupe -COOH, un groupe ester -COO-alkyle où la partie alkyle est un reste linéaire ou ramifié en $C_1$-$C_{12}$, de préférence en $C_1$-$C_6$,
- t est un nombre entiers égal à 0 ou 1,

avec les conditions supplémentaires selon lesquelles :

+ quand t = 0, le symbole Y est alors un radical monovalent $Y^1$ représentant le groupement de formule :

$Y^1$ : 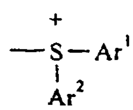

où les symboles $Ar^1$ et $Ar^2$ possèdent les significations données ci-avant,

+ quand t = 1 :

  ✪ d'une part, le symbole Y est alors un radical divalent ayant les significations $Y^2$ à $Y^4$ suivantes :

  - $Y^2$ : un groupement de formule :

    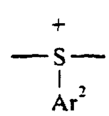

    où le symbole $Ar^2$ possède les significations données ci-avant,
  - $Y^3$ : un lien valentiel simple,
  - $Y^4$ : un reste divalent choisi parmi :

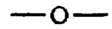 , 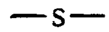 , 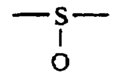 , 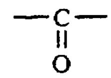 ,

un reste alkylène linéaire ou ramifié en $C_1$-$C_{12}$, de préférence en $C_1$-$C_6$, et un reste de formule —$Si(CH_3)_2O$—,

✪ d'autre part, dans le cas uniquement où le symbole Y représente $Y^3$ ou $Y^4$, les radicaux $Ar^1$ et $Ar^2$ (terminaux) possèdent, outre les significations données ci-avant, la possibilité d'être reliés entre eux par le reste Y' consistant dans $Y'^1$ un lien valentiel simple ou dans $Y'^2$ un reste divalent choisi parmi les restes cités à propos de la définition de $Y^4$, qui est installé entre les atomes de carbone, se faisant face, situés sur chaque cycle aromatique en position ortho par rapport à l'atome de carbone directement relié au cation $S^+$ ;

→ 3.2. et/ou au moins une espèce monosulfonium possédant un seul centre cationique $S^+$ par mole de cation et consistant dans la plupart des cas dans des espèces de formule :

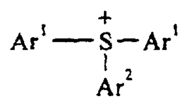 (III.2)

dans laquelle $Ar^1$ et $Ar^2$ ont les significations données ci-avant à propos de la formule (III.I), incluant la possibilité de relier directement entre eux un seul des radicaux $Ar^1$ à $Ar^2$ selon la manière indiquée ci-avant à propos de la définition de la condition supplémentaire en vigueur quand t = 1 dans la formule (II), faisant appel au reste Y' ;

4) - les sels organométalliques de formule (**IV**):

$$(L^1L^2L^3M)^{+q} \qquad (\mathbf{IV})$$

formule dans laquelle :

- M représente un métal du groupe 4 à 10, notamment du fer, manganèse, chrome, cobalt,
- $L^1$ représente 1 ligand lié au métal M par des électrons $\pi$, ligand choisi parmi les ligands $\eta^3$-alkyl, $\eta^5$-cyclopendadiènyl et $\eta^7$-cycloheptratriènyl et les composés $\eta^6$ - aromatiques choisis parmi les ligands $\eta^6$-benzène éventuellement substitués et les composés ayant de 2 à 4 cycles condensés, chaque cycle étant capable de contribuer à la couche de valence du métal M par 3 à 8 électrons $\pi$,
- $L^2$ représente un ligand lié au métal M par des électrons $\pi$, ligand choisi parmi les ligands $\eta^7$-cycloheptatriènyl et les composés $\eta^6$-aromatiques choisis parmi les ligands $\eta^6$- benzène éventuellement substitués et les composés ayant de 2 à 4 cycles condensés, chaque cycle étant capable de contribuer à la couche de valence du métal M par 6 ou 7 électrons $\pi$,
- $L^3$ représente de 0 à 3 ligands identiques ou différents liés au métal M par des électrons $\sigma$, ligand(s) choisi(s) parmi CO et $NO_2^+$ ;la charge électronique totale q du complexe à laquelle contribuent $L^1$, $L^2$ et $L^3$ et la charge ionique du métal M étant positive et égale à 1 ou 2 ;

□ *l'entité anionique* borate ayant pour formule :

$$[BX_aR_b]^-$$

formule dans laquelle :

- a et b sont des nombres entiers allant pour a de 0 à 3 et pour b de 1 à 4 avec a + b = 4,
- les symboles X représentent :

  * un atome d'halogène (chlore, fluor) avec a = 0 à 3,

* une fonction OH avec a = 0 à 2,

- les symboles R sont identiques ou différents et représentent :

  ▷ un radical phényle substitué par au moins un groupement électroattracteur tel que par exemple $OCF_3$, $CF_3$, $NO_2$, CN, et/ou par au moins 2 atomes d'halogène (fluor tout particulièrement), ce lorsque l'entité cationique est un onium d'un élément des groupes 15 à 17,
  ▷ un radical phényle substitué par au moins un élément ou un groupement électroattracteur notamment atome d'halogène (fluor tout particulièrement), $CF_3$, $OCF_3$, $NO_2$, CN, et ce lorsque l'entité cationique est un complexe organométallique d'un élément des groupes 4 à 10,
  ▷ un radical aryle contenant au moins deux noyaux aromatiques tel que par exemple biphényle, naphtyle, éventuellement substitué par au moins un élément ou un groupement électroattracteur, notamment un atome d'halogène (fluor tout particulièrement), $OCF_3$, $CF_3$, $NO_2$, CN, quelle que soit l'entité cationique ;

(2i) le POS comporte au moins un oligomère et/ou un polymère et comprend au moins un groupement (organo) fonctionnel de pontage réticulable par voie cationique est sélectionné parmi les POS qui sont :

→ soit linéaires ou sensiblement linéaires et constitués de motifs de formule (**V**), terminés par des motifs de formule (**VI**),
→ soit cycliques et constitués par des motifs de formule (**V**):

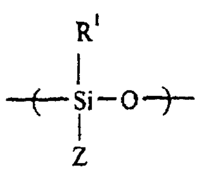 (V) 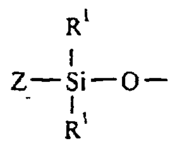 (VI)

formules dans lesquelles :

- les symboles $R^1$ sont semblables ou différents et représentent :

  - soit un radical alkyle linéaire ou ramifié en $C_1$-$C_6$, éventuellement substitué, avantageusement par un ou des halogènes, les radicaux alkyles éventuellement substitués préférés étant : méthyle, éthyle, propyle, octyle et 3,3,3 trifluoropropyle,
  - soit un radical cycloalkyle en $C_5$-$C_8$, éventuellement substitué,
  - soit un radical aryle ou aralkyle, éventuellement substitué :

    . notamment par des halogènes et/ou des alcoxyles,
    . les radicaux phényle, xylyle, tolyle et dichlorophényle étant tout particulièrement sélectionnés,

  - et, plus préférentiellement encore, au moins 60 % molaire des radicaux $R^1$ étant des méthyles,

- les symboles Z sont semblables ou différents et représentent :

  - soit le radical $R^1$,
  - soit un groupement $G_{fp}$ correspondant à un reste époxyde ou vinyléther relié au silicium par l'intermédiaire d'un radical divalent contenant, avantageusement, de 2 à 20 atomes de carbone comportant, éventuellement, un hétéroatome,

  l'un au moins des symboles Z correspondant à un groupement $G_{fp}$, et

(3i) les $G_{fp}$, du type époxyde et/ou vinyléther, présents, à raison (exprimé en éq par kg de POS) d'au moins 0.01, de préférence au moins 0,10, et plus préférentiellement encore à raison de 0,15 à 2,00.

La présente invention procède donc d'une sélection avantageuse nouvelle et inventive d'une classe particulière de compositions silicones réticulables par voie cationique - de préférence sous UV - qui se singularise par la nature de son (photo)amorceur du type borate d'onium ou borate de sels organométalliques avec un contranion borate du genre borophényle substitué par des groupements électroattracteurs par exemple fluorés, ainsi que par un POS particulier présentant un taux approprié de groupements fonctionnels de pontage $G_{fp}$.

Une telle sélection dorme accès à toute une série d'avantages intéressants, à savoir notamment :

- l'excellente stabilité (« Pot life») de la composition, l'évolution de la viscosité de cette dernière restant faible malgré la présence de l'amorceur pendant plusieurs jours, voire plusieurs mois après réalisation de la composition pour autant que celle-ci soit stockée à l'abri de la lumière ;
- une très bonne réactivité à température ambiante ;
- un faible prix de revient dû au faible coût des matières premières et à la simplicité du procédé d'application/réticulation pour l'imprégnation et/ou le vernissage ;
- une bonne souplesse d'emploi, la réactivité, la stabilité, la viscosité ainsi que le coefficient de friction du vernis de l'imprégnant ou du vernis non réticulé, pouvant être facilement modulés, dans une large mesure, en modifiant :

  Δ la masse molaire de l'huile POS porteuse de $G_{fp}$,
  Δ la concentration en amorceur
  Δ de même que le ratio molaire $G_{fp}$/POS ;

- un procédé de revêtement pour l'imprégnation et/ou le vernissage, simple à mettre en oeuvre, rapide, ne nécéssitant pas d'équipements sophistiqués et coûteux, et donc in fine, productif et rentable ;
- une absence de recours à des produits toxiques dans la composition.

Il est également à noter que les vernis ou les imprégnations obtenus sur les joints plats en particulier sur les joints de culasse, présentent un bel aspect (absence de bulles) et satisfont aux qualités requises d'anti-adhérence, d'étanchéité et de compressibilité. Par ailleurs, le vernis et/ou l'imprégnant réticulé possède de bonnes propriétés mécaniques, une résistance à l'abrasion de même qu'une tenue thermique, une tenue aux huiles et plus généralement une tenue aux produits agressifs tels que le liquide de refroidissement, tout à fait statisfaisantes.

Comme exemples de groupements organofonctionnels, $G_{fp}$ du type époxy, on peut citer ceux de formules suivantes :

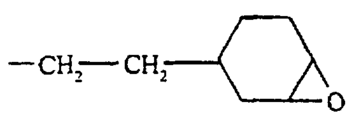 ; 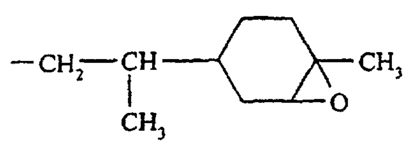

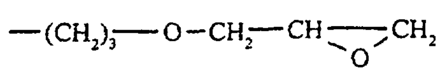 ; 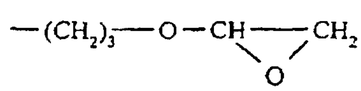

S'agissant des groupements organofonctionnels $Gf_p$ du type vinyléther, on peut mentionner, e.g., ceux contenus dans les formules suivantes :

$$—(CH_2)_3\text{-O-CH=CH}_2; \quad —(CH_3)_2—\text{O-R}^4\text{-O-CH=CH}_2 \quad —(CH_2)_3—\text{O}—\text{CH=CH-R}^5$$

avec $R^4$ =

- alkylène linéaire ou ramifié en $C_1$-$C_{12}$, éventuellement substitué,
- ou arylène, de préférence phénylène, éventuellement substitué, de préférence par un à trois groupements alkyles en $C_1$-$C_6$ ;

avec $R^5$ = alkyle linéaire ou ramifié en $C_1$-$C_6$.

Le POS utilisé a une viscosité η (exprimée en mPa.s à 25°C) dont la valeur peut varier sensiblement en

fonction des conditions d'application et de la nature des joints à traiter.

Dans le cas du traitement d'un joint déjà revêtu ou de la pose d'une faible épaisseur de revêtement, on utilisera avantageusement un POS ayant une faible viscosité comprise entre :

→ 200 et 3000,
→ de préférence 300 et 2000,
→ et plus préférentiellement encore entre 400 et 900.

Dans le cas du traitement d'un joint non revêtu ou de la pose d'une épaisseur de revêtement plus importante, on utilisera avantageusement un POS ayant une viscosité plus élevée comprise entre :

→ une valeur supérieure à 3000 et 10000,
→ de préférence : une valeur supérieure à 3000 et 6000,
→ et plus préférentiellement encore : une valeur supérieure à 3000 et 5000.

Ces valeurs de viscosité concernent aussi bien les POS linéaires que les POS cycliques susceptibles d'être mis en oeuvre conformément à l'utilisation selon l'invention.

La viscosité dynamique à 25° C, de tous les polymères silicones considérés dans le présent exposé, peut être mesurée à l'aide d'un viscosimètre BROOKFIELD, selon la norme AFNOR NFT 76 102 de février 1972.

La viscosité dont il est question dans le présent exposé est la viscosité dynamique à 25° C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Conformément à l'invention, il est parfaitement envisageable de mettre en oeuvre un mélange de différents produits à motifs de formule (**V**) et (**VI**), tels que définis ci-dessus (linéaires et/ou cycliques).

Les polyorganosiloxanes époxy ou vinyloxyfonctionnels préférés sont décrits notamment dans les brevets DE-A-4 009 889 ; EP-A-0 396 130 ; EP-A-0 355 381 ; EP-A-0 105 341 ; FR-A-2 110 115 ; FR-A-2 526 800.

Les polyorganosiloxanes époxy fonctionnels peuvent être préparés par réaction d'hydrosilylation entre des huiles à motifs Si-H et des composés époxyfonctionnels, tels que par exemple vinyl-4 cyclohexèneoxyde, allylglycidyléther.

Les polyorganosiloxanes vinyloxyfonctionnels peuvent être préparés par réaction d'hydrosilylation entre des huiles à motifs Si-H et des composés vinyioxy-fonctionnels, tels que par exemple l'allylvinyléther, l'allyl-vinyloxyéthoxybenzène.

S'agissant de l'amorceur, qui est en pratique un photoamorceur (PA) puisque l'activation de la réticulation s'effectue de préférence sous UV, il est préférable de mettre en oeuvre conformément à l'invention un PA comprenant une entité anionique borate sélectionnée parmi le groupe suivant :

$$[B(C_6F_5)_4]^- \qquad [B(C_6H_4CF_3)_4]^- \qquad [B(C_6H_3(CF_3)_2)_4]^-$$

$$[(C_6F_5)_2BF_2]^- \qquad [C_6F_5BF_3]^- \qquad [B(C_6H_3F_2)_4]^-, \qquad [B(C_6F_{40}CF_3)_4]^-$$

et leurs mélanges.

S'agissant de l'entité cationique du photoamorceur, on distingue :

- 1) les sels d'onium de formule (I)
- 2) les sels d'oxoisothiochromanium de formule (II)
- 3) les sels de mono et/ou polysylfonium de formule (III.1) et/ou (III.2)
- 4) les sels organométalliques de formule (IV).

Les premiers contre-anions de type 1) sont décrits dans de nombreux documents notamment dans les brevets **US-A-4 026 705**, **US-A-4 032 673**, **US-A-4 069 056**, **US-A-4 136 102**, **US-A-4 173 476**. Parmi ceux-ci on privilégiera tout particulièrement les cations suivants :

$$[(\Phi)_2I]^+ \qquad [C_8H_{17}\text{-O-}\Phi\text{-I-}\Phi]^+ \qquad [(\Phi\text{-}CH_3)_2I]^+$$

$[C_{12}H_{25}\text{-}\Phi\text{-}I\text{-}\Phi]^+$ $[(C_8H_{17}\text{-}O\text{-}\Phi)_2I]^+$ $[(C_8H_{17}\text{-}O\text{-}\Phi\text{-}I\text{-}\Phi)]^+$

$[(\Phi)_3S]^+$ $[(\Phi)_2\text{-}S\text{-}\Phi\text{-}O\text{-}C_8H_{17}]^+$ $[(CH_3\text{-}\Phi\text{-}I\text{-}\Phi\text{-}CH(CH_3)_2]^+$

$[\Phi\text{-}S\text{-}\Phi\text{-}S\text{-}(\Phi)_2]^+$ $[(C_{12}H_{25}\text{-}\Phi)_2I]^+$ $[(CH_3\text{-}\Phi\text{-}I\text{-}\Phi\text{-}OC_2H_5]^+$

S'agissant de la seconde famille d'entités cationiques de formule (II) et de type oxoisothiochromanium, elle comprend de préférence des cations correspondant à la structure $D_1$ qui est définie à la page 14 de la demande **WO-A-90/11303** et possède la formule (II) :

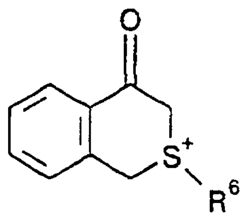

(II)

où le radical $R^6$ a la signification donnée dans cette demande WO à propos du symbole $R^1$ ; une entité cationique de ce type qui est davantage préférée est celle où $R^6$ représente un radical alkyle, linéaire ou ramifié, en $C_1$-$C_{20}$. Comme sels d'oxoisothiochromanium qui conviennent particulièrement bien, on citera notamment le sel de sulfonium de 2-éthyl-4-oxoisothiochromanium ou de 2-dodécyl-4-oxoisothiochromanium.

En ce qui concerne les entités cationiques 3), on précisera que l'entité cationique poly-sulfonium comprend préférentiellement une espèce ou un mélange d'espèces de formule (III.1) dans laquelle :

- les radicaux $Ar^1$, identiques ou différents entre eux, représentent chacun un radical phényle, éventuellement substitué par un radical alkyle linéaire ou ramifié en $C_1$-$C_4$ ou par le groupement de formule :

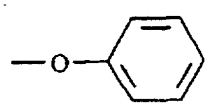 ou 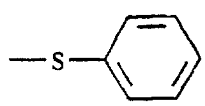 ,

- les radicaux $Ar^2$, identiques ou différents entre eux et avec $Ar^1$, représentent chacun un radical phényle, éventuellement substitué par un radical alkyle linéaire ou ramifié en $C_1$-$C_4$,
- les radicaux $Ar^3$ représentent chacun un radical para-phénylène non substitué,
- t est égal à 0 ou 1,

avec les conditions supplémentaires selon lesquelles

+ quand t = 0,

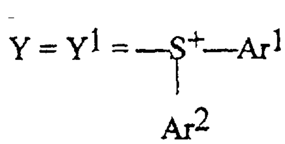

où les radicaux $Ar^1$ et $Ar^2$ ont les significations préférées données juste ci-avant dans le présent paragraphe ;

+ quand t = 1 :

✪ d'une part, Y = $Y^2$ à $Y^4$ avec :

- $Y^2$ =

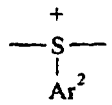

où le radical $Ar^2$ a la signification préférée donnée juste ci-avant dans le présent paragraphe,

- $Y^3$ = un lien valentiel,
- $Y^4$ = —O— ou —S— , et

✪ d'autre part, quand Y = $Y^3$ ou $Y^4$ et quand on souhaite alors mettre en oeuvre des radicaux $Ar^1$ et $Ar^2$ (terminaux) reliés entre eux, on installe une liaison Y' consistant dans un lien valentiel ou le reste —O—.

Les espèces mono-sulfonium, quand il y en a, qui entrent dans le cadre de cette modalité préférentielle sont les espèces de formule (IV) dans laquelle les symboles $Ar^1$ et $Ar^2$ possèdent les significations préférées indiquées ci-avant dans le paragraphe qui précède, incluant, quand ces radicaux sont directement reliés entre eux par un reste Y', l'installation d'un lien valentiel ou du reste —O—.

Comme exemples d'entités cationiques sulfonium, on peut citer particulièrement :

- 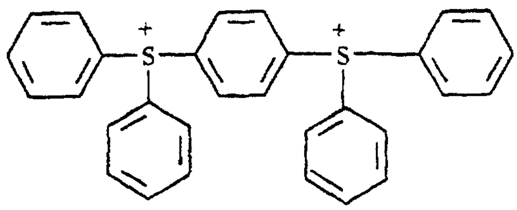

1

- 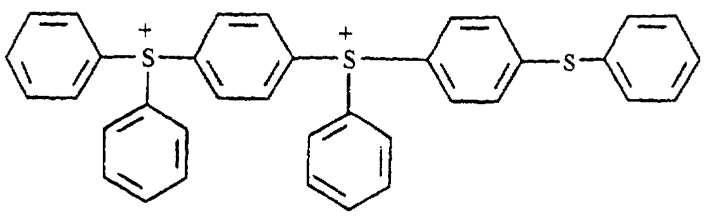

2

- 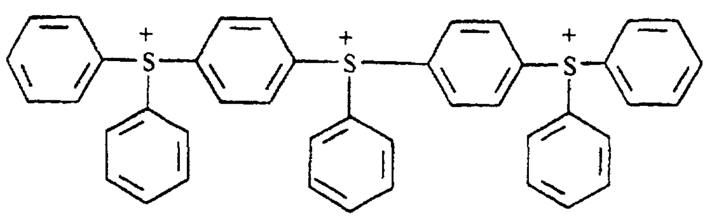

3

•

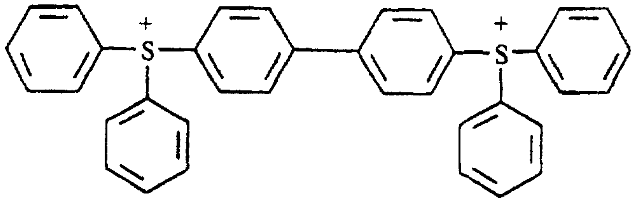

4

•

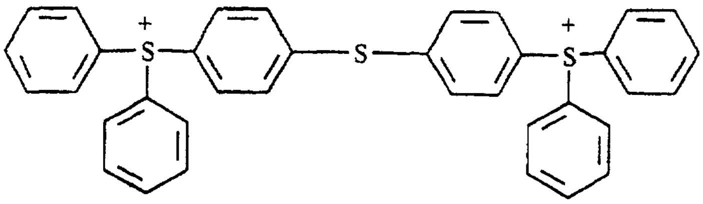

5

•

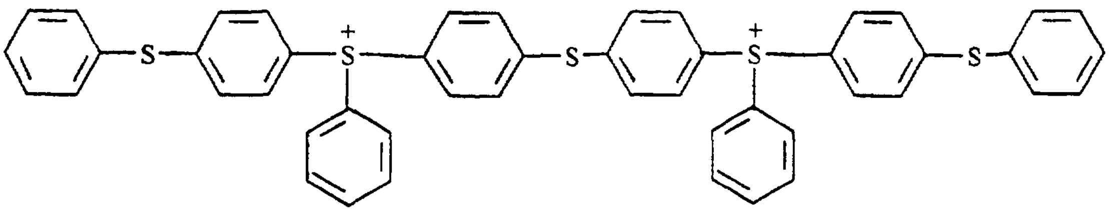

6

•

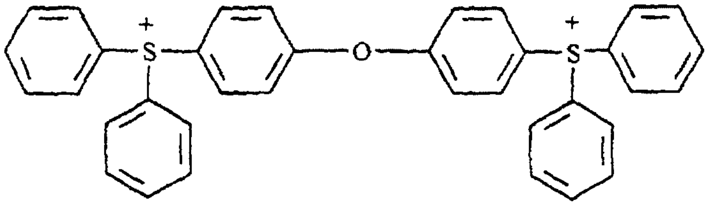

7

- 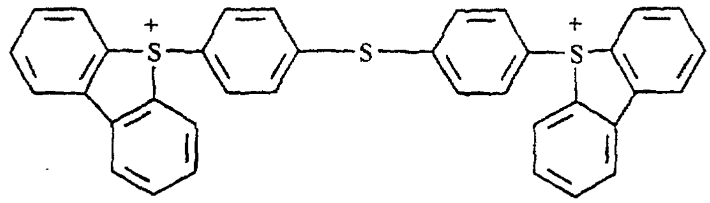

8

- 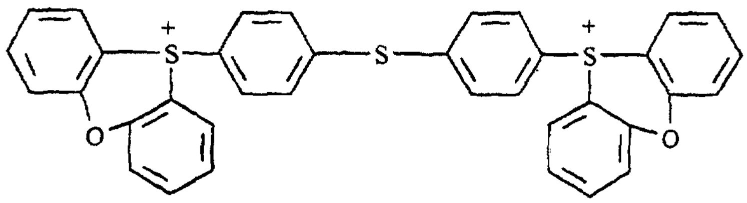

9

- les mélanges, en quantités variables, des espèces 5 + 2 + éventuellement 3,
- les mélanges, en quantités variables, de l'espèce 5 avec l'espèce 10 de formule :

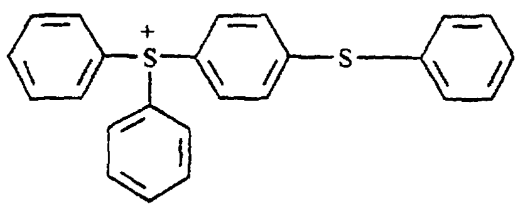

10

L'entité anionique borate est choisie préférentiellement parmi les anions de formule $[BX_aR_b]^-$ dans laquelle :

- les symboles X représentent un atome de fluor,
- les symboles R, identiques ou différents, représentent un radical phényle substitué par au moins un groupement électro-attracteur choisi parmi $OCF_3$, $CF_3$, $NO_2$ et CN, et/ou par au moins deux atomes de fluor.

Avantageusement, l'entité anionique borate de formule $[BX_aR_b]^-$ est choisie parmi les anions suivants :

| | | |
|---|---|---|
| $[B(C_6F_5)_4]^-$ 1' | $[B(C_6H_4CF_3)_4]^-$ 3' | $[B\{C_6H_3(CF_3)_2\}_4]^-$ 5' |
| $[(C_6F_5)_2BF_2]^-$ 2' | $[B(C_6F_4OCF_3)_4]^-$ 4' | $[B(C_6H_3F_2)_4]^-$ 6' |

Les nouveaux borates de polysulfonium que l'on mettra en oeuvre de façon très préférée, sont les sels formés

par l'association des cations et anions suivants :

| Cation | Anion |
|---|---|
| 5 | 1' |
| 5 | 3' |
| 5 | 4' |
| mélanges 5 + 10 | 1' |
| mélanges 5 + 10 | 3' |
| mélanges 5 + 10 | 4' |

Ces borates de polysulfonium peuvent être préparés par réaction d'échange entre un sel de l'entité cationique (halogénure tel que par exemple chlorure, iodure) avec un sel métal alcalin (sodium, lithium, potassium) de l'entité anionique.

Les conditions opératoires (quantités respectives de réactifs, choix des solvants, durée, température, agitation) sont à la portée de l'homme de l'art ; celles-ci doivent permettre de récupérer le borate de polysulfonium recherché sous forme solide par filtration du précipité formé ou sous forme huileuse par extraction à l'aide d'un solvant approprié.

Les modes opératoires de synthèse des halogénures des entités cationiques de formule (III.1) sont décrits notamment dans : "Polymer Bulletin (Berlin)", vol. 14, pages 279 - 286 (1985) et US-A-4 400 541.

Selon une alternative concernant la préparation des borates de polysulfonium. ces derniers peuvent être préparés directement par réaction entre un diarylsulfoxyde et un diarylsulfure selon l'enseignement décrit dans : "J; Org. Chem.", Vol. 55, pages 4222 - 4225 (1990).

Ces nouveaux borates de polysulfonium peuvent être mis en oeuvre, tels qu'ils sont obtenus à l'issue de leur procédé de préparation par exemple sous forme solide ou liquide ou en solution dans un solvant approprié, dans des compositions de monomères / oligomères / polymères qui sont destinés à être polymérisés et/ou réticulés par voie cationique et sous activation, par exemple UV.

Les espèces mono-sulfonium (III.2) dont il a été question ci-dessus peuvent être en particulier les co-produits qui se forment au moment de la préparation des cations polysulfonium et dont la présence peut être plus ou moins évitée.

Jusqu'à 99 %, plus généralement jusqu'à 90 % et encore plus généralement jusqu'à 50 % en mole (de cation) des espèces polysulfonium de formule (III.1) peuvent être remplacées par des espèces monosulfonium (III.2).

En ce qui concerne le quatrième type d'entité cationique, on le trouve décrit dans le brevet **US A-4 973 722**, **US-A-4 992 572**, les demandes de brevet européens **EP-A-203 829**, **EP-A-323 584** et **EP-A-354 181**. Les sels organométalliques plus volontiers retenus en pratique sont notamment :

- le ($\eta^5$-cyclopentadiènyle) ($\eta^6$-toluène) $Fe^+$
- le ($\eta^5$-cyclopentadiènyle) ($\eta^6$-méthyl1-naphtalène) $Fe^+$
- le ($\eta^5$-cyclopentadiènyle) ($\eta^6$-cumène) $Fe^+$
- le bis ($\eta^6$-mesitylène) $Fe^+$
- le bis ($\eta^6$-benzène) $Cr^+$

Il découle de ce qui précède que les photoamorceurs préférés selon l'invention sont ceux répondant aux formules suivantes :

$$[(\Phi)_2I]^+, [B(C_6F_5)_4]^- \qquad [(C_8H_{17})\text{-O-}\Phi\text{-I-}\Phi)]^+, [B(C_6F_5)_4]^-$$

$$[C_{12}H_{25}\text{-}\Phi\text{-I-}\Phi]^+, [B(C_6F_5)_4]^- \qquad [(C_8H_{17}\text{-O-}\Phi)_2I]^+, [B(C_6F_5)_4]^-$$

$$[(C_8H_{17})\text{-O-}\Phi\text{-I-}\Phi)]^+, [B(C_6F_5)_4]^- \qquad [(\Phi)_3S]^+, [B(C_6F_5)_4]^-$$

$$[(\Phi)_2S\text{-}\Phi\text{-O-}C_8H_{17}]^+, [B(C_6H_4CF_3)_4]^- \qquad [(C_{12}H_{25}\text{-}\Phi)_2I]^+, [B(C_6F_5)_4]^-$$

$[(\Phi)_3S]^+, [B(C_6F_4OCF_3)_4]^-$ $[(\Phi\text{-}CH_3)_2I]^+, [B(C_6F_5)_4]^-$

$[(\Phi\text{-}CH_3)_2I]^+, [B(C_6F_4OCF_3)_4]^-$

- ($\eta^5$ - cyclopentadiènyle) ($\eta^6$ - toluène) $Fe^+$, $[B(C_6F_5)_4]^-$
- ($\eta^5$ - cyclopentadiènyle) ($\eta^6$ - méthyl-1-naphtalène) $Fe^+$, $[B(C_6F_5)_4]^-$
- ($\eta^5$ - cyclopentadiènyle) ($\eta^6$ - cumène) $Fe^+$, $[B(C_6F_5)_4)^-$

Comme autre référence littéraire pour définir les borates d'onium 1) et 2) et les borates de sels organométalliques 4), sélectionnés comme photoamorceur dans le cadre de l'utilisation joint de culasse selon l'invention, on peut citer tout le contenu des demandes de brevet européen N° 0 562 897 et 0 562 922. Ce contenu est intégralement incorporé par référence dans le présent exposé.

Les sels amorceurs de type 1) et 2) mis en oeuvre dans le cadre de l'utilisation selon la présente invention peuvent être préparés par réaction d'échange entre un sel de l'entité cationique (halogénure tel que par exemple chlorure, iodure, hexafluorophosphate, tétrafluoroborate, tosylate) avec un sel de métal alcalin (sodium, lithium, potassium) de l'entité anionique.

Les conditions opératoires (notamment quantités respectives de réactifs, choix des solvants, durée, température, agitation) sont à la portée de l'homme de l'art ; celles-ci doivent permettre de récupérer le sel amorceur recherché sous forme solide par filtration du précipité formé ou sous forme huileuse par extraction à l'aide d'un solvant approprié.

Les sels de métal alcalin de l'entité anionique peuvent être préparés de manière connue, par réaction d'échange entre un composé halogénoboré et un composé organométallique (par exemple magnésien, lithien, stannique) portant les groupements hydrocarbonés désirés, en quantité stoechiométrique, suivie éventuellement d'une hydrolyse à l'aide d'une solution aqueuse d'halogénure de métal alcalin ; ce type de synthèse est par exemple décrite dans "J. of organometallic Chemistry" vol 178, p. 1-4, 1979 ; "J.A.C.S" 82, 1960, 5298 ; "Anal. Chem, Acta" 44, 1969, 175-183 ; brevets **US-A-4 139 681** et **DE-A-2 091 367** ; "Zh. Org. Khim." Vol.25, N°5 - pages 1099 - 1102, Mai 1989.

Le mode préparatoire des sels de l'entité cationique 4) de formule (**IV**) est décrit notamment dans D. ASTRUC, Tetrahedron Letters, 36, p.3437 (1973) ; D. ASTRUC, Bull. Soc. Chim. Fr, 1-2, p. 228 (1976) ; D. ASTRUC, Bull. Soc. Chim. Fr, 11-12, p. 2571 (1975) ; D. ASTRUC, CR Acad. Sc. Paris, série C, 272, p. 1337 (1971) ; A.N. NESMEYANOV et coll., Izves, Akad. Nauk SSSR, ser. Khim., 7, p. 1524 (1969) ; AN. NESMEYANOV et coll. Dokl. Akad. Nausk SSSR, 160 (6), p. 1327 (1965) ; A.N. NESMEYANOV et Coll. Dokl. Akad. Nausk SSSR, 149(3), p. 615 (1963).

En pratique, les amorceurs de l'utilisation suivant l'invention sont préparés de manière très simple par dissolution du borate d'onium ou de complexe organométallique, de préférence d'onium, se présentant sous forme solide (poudre) dans un solvant.

Selon une alternative concernant le borate d'onium, ce dernier peut être préparé directement dans le solvant, à partir d'un sel (e.g. chlorure) du cation (iodonium) et d'un sel (par exemple de potassium) de l'anion borate.

De préférence, il est prévu conformément à l'utilisation selon l'invention que l'amorceur (PA) est employé en solution dans un solvant organique, de préférence choisi parmi les solvants donneurs de protons et plus préférentiellement encore parmi le groupe suivant : alcool isopropylique, alcool benzylique, diacétone-alcool, esters d'acide carboxylique hydroxylé, comme par exemple le lactate de butyle, et leurs mélanges.

Il convient de préciser que par quantité catalytique efficace de PA, on entend, au sens de l'invention, la quantité suffisante pour amorcer la réticulation.

Dans la mesure où en pratique, - comme indiqué supra -, le photoamorceur ou photoinitiateur est avantageusement dissous dans un solvant polaire, en quantité telle que son titre à la solution obtenue soit compris entre 1 et 50 % en poids, de préfence entre 10 et 30 % en poids, et plus préférentiellement encore entre 15 et 25 % en poids.

Selon une modalité avantageuse de l'utilisation selon l'invention, l'incorporation du PA en solution dans la composition comprenant le POS à teneur molaire en $G_{fp}$ donnée, se fait à raison de 0,1 à 10 % en poids de solution par rapport au mélange final, de préférence 0,5 à 5 % en poids et plus préférentiellement de l'ordre de 1 % en poids.

Outre le ou les photoamorceurs spécifiques de type borate 1) à 4), le système amorceur peut comprendre selon une variante avantageuse, au moins un photosensibilisateur sélectionné parmi les produits (poly)aromatiques -éventuellement métalliques- et les produits hétérocycliques, et de préférence dans la liste de produits suivants : phénothiazine, tétracène, pérylène, anthracène, diphényl-9,10-anthracène, thioxanthone, benzophénone, acétophénone, xanthone, fluorénone, anthraquinone, 9,10-diméthylanthracène, 2-éthyl-9,10-diméthyloxyanthracène, 2,6-diméthylnaphtalène, 2,5-diphényl-1-3-4-oxadiazole, xanthopinacol, 1,2-benzanthracène, 9-nitro-anthracène, et leurs mélanges.

Selon une variante de l'utilisation conforme à l'invention, on peut mettre en oeuvre des inhibiteurs de réticulation, de préférence choisis parmi les produits alcalins, et plus préférentiellement encore parmi les produits alcalins de type aminé, par exemple du type de ceux consistant en un silicone sur lequel est greffé au moins un groupement amine, de préférence tertiaire.

Il est possible d'avoir recours à d'autres additifs connus dans ce genre d'application de compositions silicones réticulables sous UV par voie cationique. Des exemples de ces autres additifs seront donnés ci-après dans une partie du présent exposé relative aux compositions.

Les systèmes de préparation de revêtement anti-adhérents par réticulation d'un film d'une composition silicone, par exposition aux ultra-violets et selon un mécanisme de réticulation du type réaction cationique en chaîne, sont connus, comme en témoignent notamment les demandes de brevets européens N° 0 562 897 et N° 0 562 922 sus-visées. Mais, il n'avait jamais été imaginé jusqu'alors d'exploiter de tels systèmes ou de telles compositions pour le revêtement (imprégnation/vernissage) de joints plats, notamment de joints de culasse, en sélectionnant des POS ayant des taux spécifiques de groupement de réticulation $G_{fp}$ de type époxy ou vinyl éther, par exemple.

Les avantages de ces systèmes sont :

- peu ou pas de solvants. Il en résulte une faible pollution et un faible coût.
- une réticulation rapide d'où une haute productivité.
- un faible chauffage d'où une possibilité d'élargir le spectre des supports envisageables.
- une faible consommation énergétique induisant une économie substantielle.
- une simplicité méthodologique et sur le plan du dispositif qui limite le coût des investissements industriels nécessaires.

Dans le cas où elle est employée comme vernis, la composition silicone sélectionnée conformément à l'invention, est appliquée sur un support formé par un joint plat, notamment un joint de culasse, étanchéifié par imprégnation à l'aide d'un silicone et/ou revêtu d'une couche d'élastomère silicone destinée à former par exemple le trottoir de joint.

Ainsi, conformément à une variante de l'invention, le support récepteur du revêtement silicone obtenu par réticulation par voie cationique est un joint plat, notamment un joint de culasse :

° qui est préalablement imprégné par au moins un matériau d'étanchéification formé par au moins un polymère réticulé, de préférence par au moins une résine silicone,

° et/ou qui est préalablement revêtu par au moins une couche d'au moins un élastomère, sélectionné de préférence parmi les élastomères silicones réticulés ou non et leurs mélanges.

En d'autres termes, le vernissage à l'aide de la composition silicone sélectionné peut s'effectuer soit directement sur la surface nue du joint plat, notamment du joint de culasse, quelle que soit sa nature, soit sur le joint plat, notamment le joint de culasse imprégné d'une résine silicone réticulée du type condensation ou polyaddition, soit sur un joint plat, notamment un joint de culasse imprégné par une résine silicone réticulée et recouvert d'un élastomère silicone réticulé ou non formant, par exemple, les trottoirs de joint.

Le revêtement selon l'invention peut donc être appliqué sur tout support métallique, composite (kevlar, graphite) élastomère silicone, élastomère fluoré du type viton ou élastomère NBR.

Avantageusement, le vernis de joint plat, notamment joint de culasse formé par le revêtement obtenu par réticulation par voie cationique est mono ou multicouche et présente une épaisseur comprise :

- entre 1 et 100 μm
- de préférence entre 5 et 50 μm
- et plus préférentiellement encore entre 10 et 20 μm.

Selon un autre de ces aspects, la présente invention concerne un procédé de réalisation d'imprégnation(s) et/ou de revêtement(s) anti-adhésif(s) à l'interface bloc moteur/culasse de moteurs sur des supports constitués par des joints plats, notamment des joints de culasse, caractérisé en ce qu'il consiste essentiellement à mettre en oeuvre une composition réticulable sous l'effet de rayonnements UV et éventuellement sous l'effet de la chaleur, ladite composition et le support étant ceux tels que définis supra.

La présente invention concerne également un joint plat, notamment un joint de culasse caractérisé en ce qu'il est imprégné et/ou revêtu par une matrice obtenue par réticulation par voie cationique conformément à l'utilisation telle que définie supra et/ou au procédé tel que décrit supra.

La composition silicone réticulable par voie cationique qui est destinée à réaliser des imprégnations et/ou des revêtements antiadhésifs sur des joints plats, notamment des joints de culasse, comprend :

- outre au moins un POS à groupements $Gf_p$ tels que définis supra,
- outre au moins un amorceur, de préférence un photoamorceur, (PA) d'un type borate d'onium tel que défini supra,
- outre au moins un solvant du PA tel que défini supra,
- au moins un additif choisi parmi ceux généralement employés dans les traitements visant à rendre étanche et antiadhérent l'interface culasse/bloc moteur, et en particulier les joints plats comme notamment les joints de culasse.

Les différents additifs propres à l'application finale visée, à savoir les joints plats et notamment les joints de culasse sont e.g. un ou plusieurs inhibiteurs de réticulation de préférence choisis parmi les produits alcalins, et plus préférentiellement encore parmi les produits alcalins de type aminé, par exemple du type de ceux consistant en un silicone sur lequel est greffé au moins un groupement amine, de préférence tertiaire ou bien encore du type de ceux comprenant un reste pipéridinyle éventuellement alkyle substitué.

Les compositions utilisées dans l'invention peuvent également comporter :

- des modulateurs d'adhérence (résines ou polymères linéaires silicones portant par exemple des fonctions vinyle, époxy, vinyléther, alcool), comme par exemple ceux divulgués dans la demande de brevet européen N° 0 738 769 ;
- un ou plusieurs photosensibilisateurs du type de ceux évoqués ci-dessus,
- un ou plusieurs agents de charges comme par exemple : des charges minérales telles que notamment des fibres synthétiques (polymères) ou naturelles broyées, du carbonate de calcium, du talc, de l'argile, du dioxyde de titane, de la silice de précipitation ou de combustion ;
- un ou plusieurs accélérateurs de polymérisation et/ou réticulation de préférence choisi parmi les esters d'acides carboxyliques hydroxylés liquides à température ambiante (23°C) ;
- un ou plusieurs agents thixotropants ;
- et leurs mélanges.

De même, les colorants solubles, les inhibiteurs d'oxydation, et/ou tout autre matériau n'interférant pas avec l'activité catalytique du photoamorceur et n'absorbant pas dans la gamme de longueurs d'onde choisie pour la photoactivation, peuvent être ajoutés également à la composition ou mis en oeuvre dans le cadre du procédé selon l'invention.

Ces compositions utilisés dans l'invention sont préparées, indifféremment, avant (voire même longtemps avant) ou bien encore immédiatement avant l'utilisation.

Il est à noter que ces compositions sont particulièrement stables au stockage et qu'elles offrent, conformément au procédé de l'invention, des cinétiques de réticulation rapides. En outre, leur état non réticulé, avant exposition au rayonnement lumineux d'activation, offre de grandes facilités de manipulation, d'application ou de mise en place sur les joints plats tels que notamment les joints de culasse.

Le procédé selon l'invention permettant de rendre des joints plats, notamment des joints de culasse non adhérents consiste à appliquer une quantité de composition comprise généralement entre 2,5 et 250 g par $m^2$ de surface à enduire et à réticuler la composition par apport d'énergie dont au moins une partie, de préférence la totalité, est fournie par un rayonnement UV.

Le rayonnement UV utilisé présente une longueur d'onde comprise entre 200 et 400 nanomètres, de préférence compris entre 254 et 360 nanomètres.

La durée d'irradiation peut être courte et elle est généralement inférieure à la seconde et est de l'ordre de quelques centièmes de seconde pour les très faibles épaisseurs de revêtements. La réticulation effectuée est excellente, même en l'absence de tout chauffage. Bien entendu, le couplage de la photoactivation à une thermoactivation, e.g. par chauffage entre 25 et 100°C, n'est pas exclu de l'invention.

Bien entendu, on peut régler le temps de durcissement, notamment par le nombre de lampes UV utilisées, par la durée d'exposition aux UV et par la distance entre la composition et la lampe UV.

Les quantités de compositions déposées sur les supports sont variables et s'échelonnent, le plus souvent, entre 2,5 et 250 $g/m^2$ de surface traitée. Ces quantités dépendent de la nature des supports et des propriétés antiadhérentes recherchées. Elles sont plus souvent comprises entre 10 et 50 $g/m^2$ pour des supports non poreux.

Les exemples suivants sont donnés à titre illustratif.

**EXEMPLES :**

I - Matières premières

I.1. ***Les polyorganosiloxanes fonctionnalisés (RESINE UV) mis en oeuvre sont des (1,2-époxy-4-éthyle-cyclo-hexyl)-polydiméthylsiloxanes de formule :***

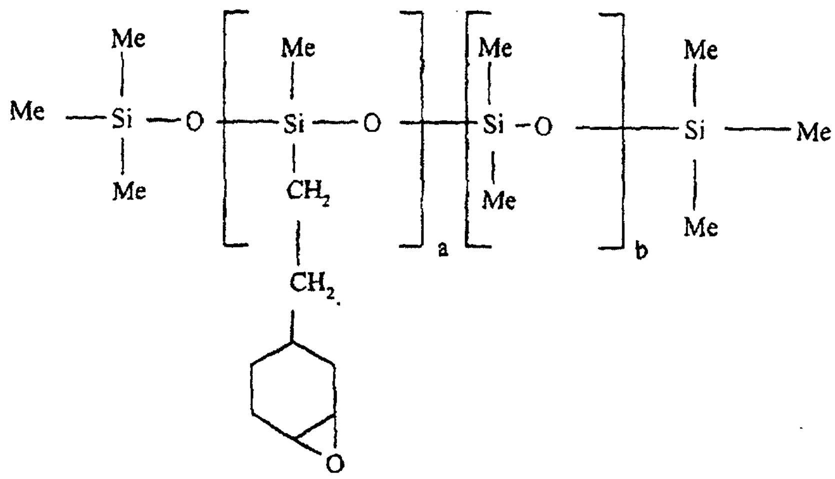

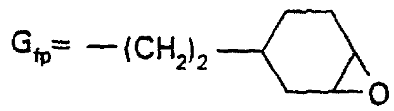

On prépare plusieurs POS ayant des différents taux d'époxy.

Cette synthèse s'effectue de la manière suivante :

L'huile silicone mise en oeuvre est un polydiméthylhydrogénosiloxane (PDMS) de formule simplifiée suivante : $M_2 D'_a D_b$

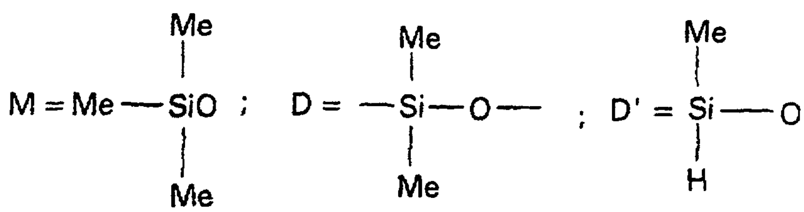

→ Le VCMX =

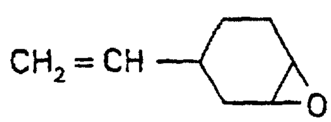

commercialisé par UNION CARBIDE.

→ Le catalyseur = Pt de Karstedt à 10 % de Pt dans le divinyltétraméthyldisiloxane ; ce catalyseur peut être utilisé au besoin en mélange avec un agent inhibiteur du Pt consistant dans la thiodiéthanol.

→ La résine A21 est une résine échangeuse d'AMBERLIT.

→ METHODOLOGIE

PHASE I : PHASE D'HYDROSILYLATION

- charger 1/3 d'huile silicone SiH sous $N_2$ (1ère partie)
- charger le VCMX sous agitation
- charger le catalyseur : Pt de karstedt à 10 %
- chauffer lentement à 60° C sous $N_2$
- charger la 2ème partie d'huile silicone en maintenant $\theta$ = 60-80°C (durée introduction : 0,5 à 1 h)
- maintenir jusqu'à $TT_{SiH}$ % maximum
  (SiH résiduel < 300 ppm)

PHASE II : ELIMINATION DU Pt

- charger la résine A2 1 (broyée, séchée)
- maintenir à 60° -80°C jusqu'à l'obtention de la décoloration maximale du milieu (durée ≥ 10 heures pour obtenir < 100 Hazen)
- filtrer pour éliminer la résine échangeuse d'ions

PHASE III : ELIMINATION DES LEGERS

- dévolatiliser sous vide : 120 /125°C 5 mmHg sous stripping $N_2$ pour éliminer les oligomères silicones et le VCMX excédentaire.
- effectuer une clarification finale pour éliminer d'éventuels micro-gels formés durant l'étape précédente. Rendement en polymère final récupéré ≈ 90 %.

Données pondérales

| Produits chargés | Unités pondérales | | | | |
|---|---|---|---|---|---|
| | A | B | C | D | E |
| Huile silicone totale | 93,6 | 105,9 | 99,37 | 86,64 | 95,25 |
| VCMX | 14,7 | 2,38 | 8,93 | 21,66 | 13,05 |
| Catalyseur | $8{,}4.10^{-3}$ | $8{,}4.10^{-3}$ | $8{,}4.10^{-3}$ | $8{,}4.10^{-3}$ | $8{,}4.10^{-3}$ |
| Résine A21 | 0,64 | 0,64 | 0,64 | 0,64 | -- |
| Thiodiéthanol | -- | -- | -- | -- | $10{,}8.10^{-3}$ |
| Produits soutirés | Unités pondérales | | | | |
| Volatils | 8,1 | 7,8 | 8,3 | 8,2 | 7,9 |
| Polymère final | 100 | 100 | 100 | 100 | 100 |

Les POS A, B, C, D, E ainsi obtenus sont définis dans le tableau ci-après :

| POS | a | b | taux d'époxyde $Gf_p$/POS (en équivalent par kg) | $\eta$ à 25° C (en mPa.s) |
|---|---|---|---|---|
| **A** | 7 | 85 | 0,90 | 350 |
| **B** | 3 | 240 | 0,16 | 780 |
| **C** | 6 | 123 | 0,58 | 580 |
| **D** | 11 | 63 | 1,60 | 580 |

(suite)

| POS | a | b | taux d'époxyde $Gf_p$/POS (en équivalent par kg) | η à 25° C (en mPa.s) |
|---|---|---|---|---|
| E | 27 | 343 | 0,88 | 4600 |

I.2. ***L'amorceur (ci-après dénommé photoamorceur PA) est un borate d'onium : le tétrakis (pentafluorophényl) borate de ditolyliodonium de formule :***

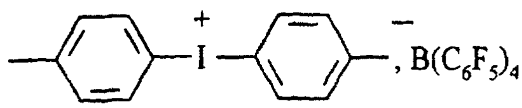

Le cation de ce borate d'onium est préparé selon la méthodologie générale décrite dans les demandes de brevet européen **N° 0 562 922** et **0 562 897**. Concernant l'entité anionique borate, on procède de la manière suivante :

Le bromopentafluorobenzène (21,3 g, 0,086 mole) et l'éther isopropylique sont chargés, sous atmosphère inerte, dans un ballon de 500 ml équipé d'une agitation mécanique, d'un réfrigérant et d'une ampoule de coulée. Le mélange est agité et est refroidi à la température de - 78° C à l'aide d'un bain acétone + glace carbonique.

Le n-butyllithium en solution dans l'hexane (1,6 M, 52,3 ml, 0,97 éq) est chargé dans l'ampoule de coulée, puis est additionné en 10 minutes environ. Le mélange est ensuite laissé pendant 30 mn sous agitation à la température de 78° C. L'ampoule de coulée est remplacée par une ampoule de coulée contenant le trichlorure de bore en solution dans l'hexane (1,0 M, 19 ml). Le trichlorure de bore est ajouté en 15 min, puis le mélange réactionnel est laissé pendant 30 min sous agitation à la température de - 78° C. On laisse ensuite revenir à température ambiante le mélange en 1 h environ. On ajoute alors une solution aqueuse saturée en KCl (100 ml). Le mélange est alors biphasique et homogène. L'éther isopropylique est distillé. Le $KB(C_6F_5)_4$ précite en fin de distillation. Il est récupéré par filtration, puis il est lavé avec une solution saturée en KCl (100 ml) avant d'être séché sous vide à la température de 35°C.

On obtient ainsi un produit titrant 97 % en produit attendu, avec un rendement de 99 %.

Les solvants utilisés sont l'alcool isopropylique, le lactate de butyle, des esters de diacétonealcool ou leurs mélanges.

Le système photoamorceur est préparé par mise en solution du borate d'onium (éventuellement complété par une partie du PDMS époxydé à mettre en oeuvre), dans le solvant.

II .<u>Le mode opératoire général suivi est le suivant</u> :

- à 100 parties en poids de PDMS époxydé,
- on ajoute x partie en poids d'une solution de borate d'onium dans un solvant (titre 18 % en poids).
- on mélange par agitation manuelle pendant 30 minutes.

III - <u>Matériel</u>

III.1 ***Type de lampe UV : technologie FUSION SYSTEM® F450 (Société FUSION)***
Puissance totale de la lampe : 120 Watts

L'émetteur de la lampe UV se compose d'un tube de quartz transparent rempli de mercure. Le rayonnement UV s'effectue par excitation de l'émetteur avec des micro-ondes et des magnétons provoquant ainsi l'évaporation du mercure et l'émission d'UV : système UV Fusion.

III.2 ***Caractéristiques du banc UV :***

Le tapis de banc UV peut atteindre une vitesse maximale de défilement de l'ordre de 52 m/mn. La vitesse de ce banc est réglable selon les besoins de l'utilisateur ou de la nature du produit à réticuler.

III.3 ***Barre Meyer :***

Pour déposer sur les joints un film de faible épaisseur, on dispose d'une barre Meyer. Cette barre contient le long de sa tige des rayures qui permettent, après application de la résine, d'obtenir l'épaisseur désirée. La dépose se fait automatiquement à l'aide d'un moteur électrique avec lequel il est possible de faire varier la vitesse de passage de la barre sur le joint.

III.4 ***Joints de culasse :***

Les essais ont été effectués sur des joints traditionnels « Soft » (joints carton) en provenance du groupe « Payen » ou de « joint Meillor ».
Ces joints carton sont constitués d'un aggloméré de fibres composites (généralement à base de KEVLAR) sandwiché et agrafé sur un treillis métallique.

**EXEMPLE 1 : Influence de la teneur en Photo-amorceur sur la Dureté Shore A de la résine obtenue par réticulation sous UV d'un POS A époxyfonctionnalisé**

Le POS mis en oeuvre est le POS A.
Le PA est dissous à raison de 18 % en poids dans le lactate de butyle.
Le POS contient un inhibiteur ayant pour fonction d'augmenter le « potlife » de la résine. Il est présent à hauteur de 50 ppm dans le POS. Dans tous les exemples, cet inhibiteur est constitué par une amine tertiaire commercialisée sous la marque TINUVIN 765 par la société CIBA GEIGY (dérivé de 1,2,2,6,6-pentaméthyl-4-pipéridyle).
La méthodologie utilisée est celle décrite dans le préambule des exemples.
Les mesures de Dureté Shore A ont été effectuées à différents taux de solution de photoamorceur, 1%, 1,5 %, 2 %, 2,5 % et 3 % (résine avec inhibiteur et photo-amorceur dans la lactate de butyle). Deux essais de reproductibilité ont été effectués (essais 1 et 2).
La référence est formée par une résine bicomposante de polyaddition (partie A et partie B mélangées 50/50 en poids).
La partie A est constituée d'une huile silicone vinylée et d'un catalyseur platine (2,5 % de groupement vinyles et 45 parties par million de platine).
La partie B est constituée d'un mélange de différentes huiles silicones vinylées ou hydrogénées et d'un retardateur de polymérisation « constitué par de l'éthynylicyclohexanol».
(1,5 % de groupement Vinyles et 20 % de groupement polyméthylhydrogénosiloxane).

⇒ **Résultats :**

Tableau 1

| % poids solution PA par rapport au POS | 1% | 1,5 % | 2 % | 2,5 % | 3 % | Référence |
|---|---|---|---|---|---|---|
| Dureté Shore A Essai 1 | 78,4 | 74,7 | 76,4 | 76,3 | 74,5 | 74,2 |
| Dureté Shore A Essai 2 | 79,3 | 79,7 | 76,7 | 73,9 | 73,7 | 73,2 |

⇒ **Analyse :**

La Dureté Shore A est pratiquement identique quelle que soit la composition du mélange résine UV + % de photo-amorceur. Elle se répartit dans un intervalle de dureté compris entre 74 à 80. Elle est légèrement supérieure à la dureté de la résine de référence. Ces résultats ainsi obtenus prouvent que la résine possède le même niveau de réticulation, quelque soit la concentration en PA.

**EXEMPLE 2 : Détermination de la Dureté König**

2.1. INFLUENCE DE LA VITESSE DE DEFILEMENT DU BANC UV SUR LA DURETE KÖNIG DE LA RESINE AVEC INHIBITEUR A DIFFERENTS % DE PHOTO-AMORCEUR (LACTATE DE BUTYLE)

L'objectif de cette étude consiste à contrôler, grâce à la Dureté König, l'évolution de la réticulation de la Résine

UV de type A en fonction de la durée d'exposition à l'UV et de la proportion de Photo-Amorceur ajoutée. L'enduction a été réalisée avec une barre Meyer n° 3 (épaisseur déposée environ 20 µm) sur du papier. La résine, une fois réticulée à différentes vitesses de défilement, est ensuite soumise au Pendule de König.

⇒ **Résultats :**

Tableau 2

| % PA en solution par rapport au mélange POS + PA Vitesse | 1 % Dureté König | 1,5 % Dureté König | 2 % Dureté König | 2,5 % Dureté König | 3 % Dureté König |
|---|---|---|---|---|---|
| 12,5 % vitesse maxi 4 m/ minute | 26,6 | 22,6 | 21,9 | 28,4 | 23,5 |
| 25 % vitesse maxi 11,5 m/ minute | 29,4 | 25,2 | 24,9 | 24,1 | 19,6 |
| 50 % vitesse maxi 28,1 m/ minute | 23,4 | 22,4 | 23,1 | 21 | 24,1 |
| 75 % vitesse maxi 39,2 m /minute | 25,6 | 21 | 22,9 | 23,8 | 21 |
| 100 % vitesse maxi 52,1 m/ minute | 28,7 | 22,4 | 24,7 | 23,3 | 24,1 |

Résine POS avec 50 ppm d'inhibiteur constitué par du TINUVIN.

⇒ **Analyse :**

D'après l'analyse du tableau concernant la Dureté König de la résine UV (avec inhibiteur) à différents taux de Photo-Amorceur (lactate de butyle) en fonction de la vitesse du banc UV, on constate que la réticulation a lieu dans tout les cas quelque soit le pourcentage de Photo-amorceur et la vitesse, même pour une faible teneur en Photo-Amorceur et une vitesse maximale sur banc UV. Les valeurs de Dureté König indépendamment du % Photo-amorceur et de la vitesse du banc UV se situe entre 19,6 et 29,4. Il semblerait toutefois que le mélange à 1% dispose d'un meilleur taux de réticulation plus élevé que les autres mélanges et malgré la variation de la vitesse de défilement du banc.

2.2. EVOLUTION DANS LE TEMPS DE LA DURETE KÖNIG DE LA RESINE A (AVEC INHIBITEUR) ET DE LA RESINE DE REFERENCE SUR PLAQUE METALLIQUE (ACIER) ENDUIT D'UN COTE D'UN PROMOTEUR D'ADHÉRENCE

On enduit une plaque métallique d'un côté d'un promoteur d'adhérence ou primaire (titanate d'isopropyle à 4 % dans l'alcool isopropylique) préalablement dégraissée. Ensuite, on dépose sur chaque face la résine (résine A et résine de référence) et on contrôle par la suite l'évolution de la Dureté König cinq jours après application.

⇒ **Résultats :**

Tableau 3

| % en poids PA en solution par rapport au mélange POS + PA | 1er jour sans primaire Dureté König | 1er jour avec primaire Dureté König | 5ème jour sans primaire Dureté König | 5ème jour avec primaire Dureté König |
|---|---|---|---|---|
| 2 % | 35,0 | 25,2 | 37,0 | 33,6 |
| 3 % | 39,2 | 31,4 | 45,6 | 33,9 |
| Référence | 48,2 | 58,5 | 48,5 | 59,4 |

⇒ **Analyse :**

La Dureté König de la résine de référence est supérieure à celle de la résine A. Mais sa valeur reste inchangée au cours du temps, après cinq jours à température ambiante. Le promoteur d'adhérence améliore la dureté dans le cas de la résine de référence. Quant à la résine A, le promoteur d'adhérence diminue la dureté Köning. La dureté de la Résine A augmente après cinq jours à température ambiante.

**EXEMPLE 3 : Contrôle de l'anti-Adhérence de la résine UV**

⇒ **Principe : Test standard ASTM F 607-84**

Le test d'anti-adhérence s'effectue en utilisant un extensomètre. On applique, par enduction sur chaque face d'un joint soft (ou cartonné) préalablement imprégné, un film de résine POS A en faible épaisseur grâce à une barre Meyer. Ce film résineux à l'aspect huileux est ensuite réticulé avec un passage sous banc UV dont la vitesse de défilement du tapis est de 2,8 m/min afin de s'assurer que la réticulation soit totale. Dans le cas de la résine de référence, le joint, après enduction à la barre Meyer, est quant à lui placé à l'intérieur d'une étuve étalonnée à une température de 150° C pendant environ 5 à 10 minutes.

Après vernissage du joint, le joint est découpé à l'emporte-pièces pour constituer deux éprouvettes circulaires (Ø 50 mm) en forme de disque comportant sur chacune de ces faces le vernis anti-adhérent. Chaque disque est placé entre deux supports en Fonte G5. A l'aide d'une presse, une pression de 10 Mpa est exercée sur les supports renfermant le joint circulaire pour se situer dans les conditions de serrage des joints de culasse lors du montage du moteur. La pression de 10 Mpa est réalisés en serrant des boulons situés aux extrémités de la presse à l'aide d'une clé disposant d'un dynamomètre.

Ensuite, l'ensemble des presses contenant les échantillons de disques vernis est soumis à une température de 130° C pendant 72 heures.

Après un délai écoulé de 72 heures sous étuve à 130° C, les presses sont sorties de l'étuve et laissées pendant une journée à température ambiante afin de refroidir. Elles sont ensuite démontées afin de récupérer les supports renfermant les joints circulaires. Ces supports sont encastrés dans des mâchoires adaptées de l'extensomètre dont le rôle sera de mesurer la force de rupture (en Newtons) qu'il faut exercer pour séparer les deux supports emprisonnant le joint. En effet, la résine de vernissage déposée sur le joint peut, à la suite d'avoir subi une température de 130° C et une pression de 10 Mpa pendant 72 heures, détenir des interactions avec la matière des supports, c'est-à-dire adhérer aux supports.

Si l'extensomètre indique une force de rupture élevée, cela signifie que le vernis adhère au support et que l'anti-adhérence de la résine est faible.

Il advient parfois que les supports se décollent automatiquement durant la démonte de la presse après le passage obligatoire dans l'étuve à 130°C pendant 72 heures. Ce décollement spontané du joint préalablement vernis provient de l'excellente propriété anti-adhérente de la résine silicone ayant servie à l'enduction. L'adhérence du joint est totalement négligeable. Il sera donc admis que la force de rupture, résultant de l'écartement de deux supports renfermant le joint, est nulle et que la capacité d'anti-adhérence de la résine est considérable.

En fin de rupture à extensomètre, chaque support, ayant été utilisé pour le serrage du joint, est analysé par l'opérateur pour estimer le pourcentage de résine restant accrochée. Ce pourcentage peut s'exprimer en % de rupture cohésive ou adhésive. 100 % de rupture cohésive signifie que le joint a tellement adhéré sur les supports qu'il s'est déchiré se divisant en deux parties demeurant liées à leur support initial de contact. 100 % de rupture cohésive correspond à une antiadhérence parfaite de la résine sur les supports, il ne reste aucune trace de résine sur le support après rupture à extensomètre.

⇒ **Résultats :**

Résine testée = Résine UV de type A avec inhibiteur TINUVIN (50 ppm) et résine de référence
Enduction : Barre Meyer n° 3, épaisseur d'environ 15-20 μm
Réticulation UV : 1 passage sous banc UV, vitesse = 10 % (2,8 m/mn)
Réticulation : Résine de référence : 10-15 minutes à 150°C avec une montée en température constante de 70° C à 150°C.

Tableau 4

| % PA en solution par rapport au mélange POS + PA | Force à la rupture en N | Contrainte / Rupture en MPa | Type de rupture |
|---|---|---|---|
| 1 % n°1 | 274,1 | 0,140 | 90%adhésive |
| 1 % n°2 | 562,2 | 0,287 | 85 % adhésive |
| Moyenne 1 % | 418,2 | 0,213 | 85 %-90 % adhésive |
| 2 % n°1 | 493,1 | 0,251 | 80 % adhésive |
| 2 % n°2 | 503,4 | 0,257 | 70 % adhésive |
| Moyenne 2 % | 498,2 | 0,254 | 75 % adhésive |
| 3 % n°1 | 563,5 | 0,287 | 75 % adhésive |
| 3 % n°2 | 156,9 | 0,080 | 65 % adhésive |
| Moyenne 3 % | 360,2 | 0,184 | 70 % adhésive |
| référence n° 1 | 439,4 | 0,224 | 95 % adhésive |
| référence n° 2 | 346,6 | 0,177 | 98 % adhésive |
| Moyenne référence | 393,0 | 0,200 | 97 % adhésive |

⇒ **Analyse :**

Si l'on se réfère au tableau 4 regroupant les valeurs de test d'anti-adhérence de la résine UV de type A et de la résine de référence, il en résulte que la résine UV détient approximativement une même capacité anti-adhérente indépendamment de la teneur en Photo-Amorceur (valeur moyenne de la force de rupture comprise entre 498 et 360 N). Cette anti-adhérence est comparable à celle de la résine de référence (valeur moyenne de la force à la rupture de 393 N). L'anti-adhérence de la résine de référence se situe dans le même ordre de grandeur de la résine UV.

**CONCLUSION**

La résine UV de type A (résine avec inhibiteur TINUVIN, photo-amorceur dilué dans le lactate de butyle) dispose des mêmes propriétés mécaniques que la résine de référence.Le test d'anti-adhérence a démontré que le % rupture adhésive était proche de 100 % pour la résine de référence et qu'il est situé entre 70 % et 90 %, en ce qui concerne la résine UV, malgré une force à la rupture équivalente.

**EXEMPLE 4 : Influence de la présence d'inhibiteur et de la nature chimique du diluant utilisé pour le Photo-Amorceur sur l'anti-adhérence**

*4.1 Résine UV de type A :*

⇒ **Principe:**

Afin de savoir quelles étaient les influences de l'inhibiteur et du diluant sur l'anti-adhérence, une série de quatre mélanges (NRNC, NRAC, ARNC, ARAC) d'une teneur en solution de Photo-amorceur de 2% a été soumise au test d'anti-adhérence.

⇒ **Résultats :** cf. Tableau 5

- Résines :

  Δ Résine testée : Résine A (idem exemples 1 à 3) décrite en I.1.
  Δ Résine de référence : (idem exemples 1 à 3) décrite à l'exemple 1.

- inhibiteur : TINUVIN (idem exemples 1 à 3).

Enduction : Barre Meyer n° 3, épaisseur d'environ 15-20 μm
Réticulation UV : 1 passage sous banc UV, vitesse = 10 % (2,8 m/min)
Réticulation : Résine de référence : 10-15 minutes à 150°C avec une montée en température constante de 70° C à 150°C.

Tableau 5

| Résines | Force à la rupture en N | Contrainte / Rupture en MPa | Type de rupture |
|---|---|---|---|
| NRNC 2 % n° 1 | 493,1 | 0,251 | 80 % adhésive |
| NRNC 2 % n° 2 | 503,4 | 0,257 | 70 % adhésive |
| Moyenne NRNC 2 % | 498,2 | 0,254 | 75 % adhésive |
| NRAC 2 % n°1 | 89,0 | 0,045 | 95 % adhésive |
| NRAC 2 % n°2 | 39,1 | 0,020 | 95 % adhésive |
| Moyenne NRAC 2 % | 64,0 | 0,033 | 95 % adhésive |
| ARNC 2 % n° 1 | | proche de 0 | 100 % adhésive |
| ARNC 2 % n°2 | 0 | proche de 0 | 100 % adhésive |
| Moyenne ARNC 2 % | 0 | proche de 0 | 100 % adhésive |
| ARAC 2 % n° 1 | 0 | proche de 0 | 100 % adhésive |
| ARAC 2 % n°2 | 28,6 | 0,015 | 100 % adhésive |
| Moyenne ARAC 1% | 14,3 | 0,007 | 100 % adhésive |
| référence n° 1 | 372,8 | 0,190 | 90 % adhésive |
| référence n° 2 | 402,2 | 0,205 | 90 % adhésive |
| Moyenne référence | 387,5 | 0,198 | 90 % adhésive |

⇔ NRNC = Résine UV avec 50 ppm inhibiteur et Photo-Amorceur dilué dans le lactate de butyle
⇔ NRAC = Résine UV avec 50 ppm inhibiteur et Photo-Amorceur dilué dans l'IPA = Alcool Isopropylique
⇔ ARNC = Résine UV sans inhibiteur et Photo-Amorceur dilué dans le lactate de butyle
⇔ ARAC = Résine UV sans inhibiteur et Photo-Amorceur dilué dans l'IPA

*Remarque :*

Concernant les deux essais de la résine ARNC et le deuxième essai de la résine (NRAC), les supports en Fonte $G_5$ renfermant le joint se séparent simplement lors de la démonte de la presse après avoir été mis à l'étuve à une température de 130° C. On considère que la force à la rupture est nulle et que la contrainte à la rupture est approximativement égale à 0.

⇒ **Analyse :**

L'influence de l'inhibiteur sur l'anti-adhérence du vernis est notable. Les résines UV ne contenant pas d'inhibiteur (ARNC, ARAC) disposent d'une force à la rupture quasi nulle, il n'est pas nécessaire parfois d'imposer aux supports renfermant le joint vernis le test d'anti-adhérence. Car, durant la démonte de la presse, le joint n'a aucune adhérence avec les supports. Les résines UV, ARNC et ARAC, comparativement à la résine de référence (force à la rupture équivalente à 387,5 N), possèdent une propriété anti-adhérente supérieure.

Les résines UV sans inhibiteur (ARNC et ARAC) ont une rupture adhésive de 100 % (90 % de rupture adhésive pour la résine de référence). Ces ruptures adhésives de 100 %, des résines UV ARNC et ARAC prouvent que ces dernières n'adhèrent pas sur les supports en fonte G5 et possèdent un excellent comportement devant la contrainte exercée par le test d'anti-adhérence.

*4.2 - Résine UV de type E :*

On reproduit l'exemple 4.1 au départ de la résine E décrite en I.1. Un mélange de type ARAC ayant une teneur en solution de photo-amorceur de 1 % a été soumis au test d'antiadhérence.

⇒ **Résultats :**

- force à la rupture en N : 0,
- contrainte à la rupture en MPa : proche de 0,
- type de rupture : 100 % adhésive.

**EXEMPLE 5 : Contrôle de la viscosité Dynamique des Résines UV (NRNC, NRAC, ARNC, ARAC) à 2 % de teneur en solution de Photo-Amorceur**

L'objectif de cette expérience est d'évaluer les viscosités dynamiques de chaque résine UV sur une période de trois jours et de suivre son évolution. Ceci afin d'apprécier le « pot life » de chaque résine étudiée.

⇒ **Résultats :**

Tableau 6

| Résines | NRNC 2 % | NRAC 2 % | ARNC 2 % | ARAC 2 % |
|---|---|---|---|---|
| Viscosité Dynamique 1er jour (centipoise) | 340 | 290 | 305 | 310 |
| Viscosité Dynamique 3ème jour (centipoise) | 360 | 325 | 330 | résine réticulée solide |

⇔ NRNC = Résine UV de type A avec 50 ppm inhibiteur et Photo-Amorceur dilué dans le lactate de butyle
⇔ NRAC = Résine UV de type A avec 50 ppm inhibiteur et Photo-Amorceur dilué dans PIPA
⇔ ARNC = Résine UV de type A sans inhibiteur et Photo-Amorceur dilué dans le lactate de butyle
⇔ ARAC = Résine UV de type A sans inhibiteur et Photo-Amorceur dilué dans l'IPA

L'inhibiteur utilisé est le même que précédemment TINUVIN).

**EXEMPLE 6 : Détermination de la vitesse de polymérisation des résines UV**

L'objectif de cet exemple est d'évaluer la vitesse de polymérisation de chaque type de résine UV et de savoir à quelle teneur en Photo-Amorceur elle est la plus rapide, ceci afin de certifier les résultats obtenus précédemment et d'estimer le degré de réticulation le plus élevé. La vitesse de polymérisation se détermine à l'aide d'un appareil appelé VNC RAPRA UV. (Société RAPRA Ltd).

On mesure le temps où 95 % (T95) de la résine est réticulée. Ce temps sera ensuite reporté sur des graphes.

*6.1. Résine UV de type A :*

La **Fig. 1** annexée représente les courbes T95 = f (teneur en solution de Photo-amorceur à 18 %) pour la résine A en faisant varier la composition comme indiqué ci-dessous :

- ⇔ NRNC = Résine UV de type A avec 50 ppm inhibiteur et Photo-Amorceur dilué dans le lactate de butyle
- ⇔ NRAC = Résine UV de type A avec 50 ppm inhibiteur et Photo-Amorceur dilué dans l'IPA
- ⇔ ARNC = Résine UV de type A sans inhibiteur et Photo-Amorceur dilué dans le lactate de butyle
- ⇔ ARAC = Résine UV de type A sans inhibiteur et Photo-Amorceur dilué dans l'IPA

*6.2. Résine UV de type A; B ; C ; D ; E (Cfl.1)*

Les **Fig. 2** à **5** annexées représentent les courbes RAPRA T95 = f (teneur en solution de Photo-amorceur à 18 %) pour les résines A à D selon I.1 supra. Le solvant est l'IPA. Il n'est pas prévu d'inhibiteur. Pour la résine de type E, la valeur RAPRA T95 est de 0,8 minute avec une teneur en solution de photo-amorceur de 1 %.

**EXEMPLE 7 : Tenue aux huiles des Résines UV**

*7.1 Résine UV de type A* :

■ *Principe :*

La tenue aux huiles permet de vérifier l'innocuité et la stabilité de la résine vis à vis des huiles préposées à la lubrification du moteur dans les conditions physiques (températures) et mécanismes imposés par le régime du moteur. Ce test est essentiel dans la mesure où il permet de juger si une résine silicone anti-adhérente ne se dégrade pas et garde intégralement ses propriétés initiales. La finalité de ce test est de vérifier que la résine possède les qualités adéquates afin de subir le moins possible les agressions chimiques auxquelles elle est confrontée et exposée durant le fonctionnement d'un moteur.

Pour apprécier la tenue aux huiles, on place un échantillon de résine de masse déterminée dans l'huile moteur et on le soumet à une température de 150° C pendant 72 heures. Ensuite, on examine les paramètres suivants :

- ➢ l'écart de masse
- ➢ la variation de dureté Shore A
- ➢ la différence d'épaisseur.

Lorsque toutes les données expérimentales ont été recueillies, on détermine la perte ou le gain de masse, d'épaisseur et de dureté en pourcentage (%).

Un pourcentage proche de 0 %, quelque soit le paramètre étudié (masse, dureté ou épaisseur) confirme d'une excellente tenue aux huiles dans les conditions de simulation d'un moteur fonctionnant en régime régulier (150° C).

■ *Résultats :*

La tenue aux huiles a été réalisée pour des Résines UV de type A(Cf.I.1) sans inhibiteur = AR (0,5 % ; 1 % en photo-amorceur AC, NC) et avec inhibiteur NR (1 % ; 3 % en Photo-amorceur).

- NR : résine UV avec 50 ppm inhibiteur
- AR : résine UV sans inhibiteur
- NC : Photo-amorceur dilué dans le lactate de butyle
- AC : photo-amorceur dilué dans l'IPA

Le photo-amorceur, l'inhibiteur, la résine A et la résine de référence sont les mêmes que dans les exemples 1 à 6.

⇒ Variation en pourcentage de la masse des Résines UV NR, AR avant et après Tenue aux huiles à 150°C

Tableau 7

| Pourcentages | % M masse (g) | % Dureté Shore A | % E épaisseur (mm) |
|---|---|---|---|
| NRNC 1% | + 6,39 | cassable | + 2,73 |
| NRNC 3% | + 6,55 | cassable | + 4,74 |
| NRAC 1% | + 7,71 | cassable | + 2,42 |
| VRAC 3% | + 8,65 | cassable | + 3,11 |
| ARNC 0,5% | + 4,87 | - 4,95 | + 3,59 |
| ARNC 1% | + 5,20 | - 2,27 | + 2,28 |
| ARAC 0,5% | + 5,75 | - 2,12 | + 1,48 |
| ARAC 1% | + 6,63 | - 2,13 | + 2,78 |
| référence | + 4,90 | - 4,77 | + 1,63 |

■ *Analyse :*

D'après les valeurs de masses recueillies, la résine de référence et la résine de type A-ARNC 0,5 % se partage la meilleure Tenue aux Huiles. Les résines A-NR ont une moins bonne Tenue aux Huiles alors que les résines A-AR possèdent une Tenue aux huiles plus élevée. Les résines A-NR ont tendance à être cassable. La dureté Shore A et l'épaisseur des résines A et référence ne sont pas affectées par la Tenue aux Huiles.

*7 2. Résine UV de type E* :

On reproduit l'exemple 7.1 au départ de la résine E décrite en I.1. Un mélange de type ARAC ayant une teneur en solution de photo-amorceur de 1 % a été soumis au test de tenue aux huiles.

■ *Résultats :*

- % M masse (g) : + 6,4,
- % Dureté Shore A : - 2,5.

**EXEMPLE 8 : Tenue au liquide de refroidissement**

*8.1. Résine UV de type A* :

■ *Principe :*

Le test de tenue au liquide de refroidissement est comparable au test de tenue aux huiles. L'objectif de cette étude est de vérifier l'innocuité de la résine UV au contact du glycol ou liquide de refroidissement. L'analyse et la procédure expérimentale de la tenue au liquide de refroidissement est pratiquement analogue à celles de la tenue aux huiles à la différence que les échantillons résineux et réticulés sont placés à l'intérieur d'une étuve de 100° C pendant 72 heures dans 100 ml de liquide de refroidissement. Ce test permet de se placer dans les conditions normales de fonctionnement d'un moteur et de constater s'il n'y a pas dégradation de la résine par le glycol.

■ *Résultats :*

La tenue au Liquide de Refroidissement a été réalisée pour des Résines de type A (CfI.1) sans inhibiteur = AR (0,5 % ; 1 % en photo-amorceur AC, NC) et de type A avec inhibiteur NR (1 % ; 3 % en Photo-amorceur).

- NR : résine UV avec 50 ppm inhibiteur
- AR : résine UV sans inhibiteur
- NC : Photo-amorceur dilué dans le lactate de butyle
- AC : photo-amorceur dilué dans l'IPA

Le photo-amorceur, l'inhibiteur, la résine A et la résine de référence sont les mêmes que dans les exemples 1 à 7.

Tableau 8

| Pourcentages | % M masse (g) | % Dureté Shore A | % E épaisseur (mm) |
|---|---|---|---|
| NRNC 1% | - 8,64 | cassable | - 6,81 |
| NRNC 3% | - 3,42 | cassable | - 4,78 |
| NRAC 1% | - 5,40 | cassable | - 2,39 |
| NRAC 3% | - 3,36 | cassable | - 3,36 |
| ARNC 0,5% | - 1,83 | - 3,30 | - 1,52 |
| ARNC 1% | - 2,38 | - 2,51 | -3,61 |
| ARAC 0,5% | - 1,80 | - 2,85 | - 2,41 |
| ARAC 1% | - 4,74 | - 6,56 | - 5,34 |
| référence | - 1,30 | - 1,15 | - 0,85 |

■ *Analyse :*

La perte en masse provoquée par une Tenue au Liquide de Refroidissement est plus importante pour les Résines A-NR que AR. Mais, c'est la résine de référence qui détient la meilleure Tenue au Liquide de Refroidissement (%M = 1,30). Les résines A-AR à 0,5 % de photo-amorceur possèdent une excellente Tenue au Liquide de Refroidissement comparable à celle de la résine de référence. Après Tenue au Liquide de Refroidissement, les résines A-NR sont friables et cassables. L'épaisseur et la dureté Shore A varient peu.

*8.2. Résine UV de type E* :

On a reproduit l'exemple 8.1 au départ de la résine E décrite en I.1. Un mélange de type ARAC ayant une teneur en solution de photo-amorceur de 1 % a été soumis au test de tenue au liquide de refroidissement.

■ *Résultats :*

- % M masse (g) : - 5,
- % Dureté Shore A : + 8.

**EXEMPLE 9 : Détermination du niveau de réticulation par le Taux d'extractibles, (Ext)**

■ *Principe :*

Evaluation de l'influence d'un solvant sur la structure chimique de la résine silicone réticulée. On place une éprouvette cylindrique de résine pendant 72 H dans le solvant en ayant pris soin de la peser auparavant.
Le taux d'extractibles correspond au pourcentage de masse de résine extraite par le solvant (méthulcyclohexane). Si ce taux est important, la masse récupérée par le solvant est donc élevée. Cette masse est en relation

directe avec le degré de réticulation. Car, plus le taux d'extractibles est considérable, plus la réticulation de la résine analysée est médiocre. En effet, un taux d'extractibles élevé signifie que le solvant attaque ou détériore plus facilement la résine. Inversement, un faible taux d'extractible correspond à un niveau de réticulation conséquent.

- M initiale : masse de la résine après réticulation
- M gonflée : masse de la résine ayant absorbée du solvant (72 heures dans le méthylcyclohexane).
- M ext : masse de résine récupérée par le solvant (M initiale - M finale)
- M finale : masse initiale moins la masse extraite par le solvant (passage à l'étuve de la masse gonflée à 70°C pendant 24 heures)

Taux d'extractible : Ext % = (M initiale - M finale)* 100/M initiale.

La résine A (Cfl.1), la résine de référence, l'inhibiteur (avec NR -50 ppm, sans AC), le photo-amorceur sont les mêmes qu'aux exemples 1 à 8.

■ *Résultats :*

Les conditions expérimentales sont les mêmes qu'à l'exemple 8.

Tableau 9

| | M initiale | M gonflée | M Ext | M finale | % G | % Ext | Mc |
|---|---|---|---|---|---|---|---|
| NRNC 1 % | 2,9110 | 4,4320 | 0,1460 | 2,7650 | 52,25 | 5,02 | 495,29 |
| NRNC 3 % | 2,8125 | 4,4735 | 0,1005 | 2,7120 | 59,06 | 3,57 | 728,13 |
| NRAC 1 % | 2,5855 | 3,9345 | 0,0995 | 2,4860 | 52,17 | 3,85 | 454,87 |
| NRAC 3 % | 2,8650 | 4,9560 | 0,2375 | 2,6275 | 72,98 | 8,29 | 788,58 |
| ARNC 0,5 % | 3,0115 | 4,1060 | 0,0955 | 2,9160 | 36,34 | 3,17 | 263,83 |
| ARNC 1 % | 2,6150 | 3,6925 | 0,1100 | 2,5055 | 41,20 | 4,19 | 316,62 |
| ARAC 0,5 % | 2,8315 | 3,9870 | 0,1580 | 2,6735 | 40,81 | 5,58 | 312,08 |
| ARAC 1 % | 2,6935 | 4,1585 | 0,1190 | 2,5745 | 54,39 | 4,42 | 485,89 |
| référence | 2,7440 | 3,9080 | 0,1160 | 2,6280 | 42,42 | 4,23 | 330,66 |

**- Mc : Masse moyenne en nombre des connexions interchaînes**

**- % G : Taux de Gonflement**

**- % Ext : Taux d'extractibles**

**- NC : solvant Lactate de butyle**

**- AC : Solvant IPA**

■ *Analyse :*

La résine A-AR (ARNC 0,5 %, ARNC 1 % et ARAC 0,5 %, ARAC 1%), suite à une immersion de 72 heures

dans le méthylcyclohexane détient des propriétés et des qualités physiques et chimiques excellentes qui lui permettent de résister à l'agression du solvant. Elle a un taux d'extractibles faible.

## Revendications

**1.** Utilisation pour la réalisation d'imprégnation et/ou de revêtement(s) antiadhésifs) mis en oeuvre à l'interface bloc moteur/culasse de moteurs et appliqué(s) sur des joints plats, notamment des joints de culasse, de compositions à base d'au moins un polyorganosiloxane (POS) réticulable par voie cationique et d'une quantité catalytique efficace d'au moins un sel amorceur (PA), ladite utilisation étant **caractérisée en ce que** :

(i) le sel amorceur (PA) est formé par un borate d'onium d'un élément des groupes 15 à 17 de la classification périodique [Chem. & Eng. News, vol 63, N° 5, 26 du 4 Février 1985] ou d'un complexe organométallique d'un élément des groupes 4 à 10 de la classification périodique (même référence),

□ *l'entilé cationique* dudit borate étant choisie parmi :

1) - les sels d'onium de formule (**I**)

$$[(R^1)_n\text{-}A\text{-}(R^2)_m]^+ \qquad (\mathbf{I})$$

formule dans laquelle :

- A représente un élément des groupes 15 à 17 tel que I, S, Se, P ou N ;
- $R^1$ représente un radical aryle carbocyclique ou hétérocyclique en $C_6$-$C_{20}$, ledit radical hétérocyclique pouvant contenir comme hétéroéléments de l'azote ou du soufre ;
- $R^2$ représente $R^1$ ou un radical alkyle ou alkényle linéaire ou ramifié en $C_1$-$C_{30}$ ; lesdits radicaux $R^1$ et $R^2$ étant éventuellement substitués par un groupement alcoxy en $C_1$-$C_{25}$, alkyle en $C_1$-$C_{25}$, nitro, chloro, bromo, cyano, carboxy, ester, mercapto,
- n est un nombre entier allant de 1 à v + 1, v étant la valence de l'élément A,
- m est un nombre entier allant de 0 à v - 1 avec n + m = v + 1 ;

2) - les sels d'oxoisothiochromanium possédant la formule :

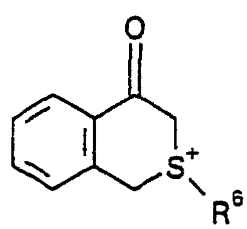

(II)

où le radical $R^6$ représente un radical alkyle, linéaire ou ramifié, en $C_1$-$C_{20}$ ;

3) - les sels de sulfonium dans lesquelles l'entité cationique comprend :

→ 3.1. au moins une espèce polysulfonium de formule III.1.

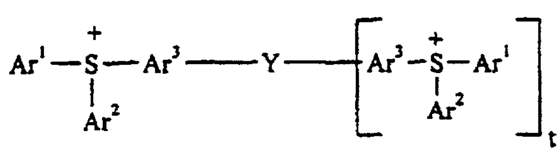

(III.1)

dans laquelle :

- les symboles $Ar^1$, qui peuvent être identiques ou différents entre-eux, représentent chacun

un radical monovalent phényle ou naphtyle, éventuellement substitué avec un ou plusieurs radicaux choisis parmi : un radical alkyle linéaire ou ramifié en $C_1$-$C_{12}$, un radical alkoxy linéaire ou ramifié en $C_1$-$C_{12}$, un atome d'halogène, un groupe -OH, un groupé -COOH, un groupe ester -COO-alkyle où la partie alkyle est un reste linéaire ou ramifié en $C_1$-$C_{12}$, et un groupement de formule -$Y^4$-$Ar^2$ où les symboles $Y^4$ et $Ar^2$ ont les significations données juste ci-après,

- les symboles $Ar^2$, qui peuvent être identiques où différents entre eux ou avec $Ar^1$, représentent chacun un radical monovalent phényle ou naphtyle, éventuellement substitué avec un ou plusieurs radicaux choisis parmi : un radical alkyle linéaire ou ramifié en $C_1$-$C_{12}$, un radical alkoxy linéaire ou ramifié en $C_1$-$C_{12}$, un atome d'halogène, un groupe -OH, un groupe -COOH, un groupe ester -COO-alkyle où la partie alkyle est un reste linéaire ou ramifié en $C_1$-$C_{12}$,
- les symboles $Ar^3$, qui peuvent être identiques ou différents entre eux, représentent chacun un radical divalent phénylène ou naphtylène, éventuellement substitué avec un ou plusieurs radicaux choisis parmi : un radical alkyle linéaire ou ramifié en $C_1$-$C_{12}$, un radical alkoxy linéaire ou ramifié en $C_1$-$C_{12}$, un atome d'halogène, un groupe -OH, un groupe -COOH, un groupe ester -COO-alkyle où la partie alkyle est un reste linéaire ou ramifié en $C_1$-$C_{12}$,
- t est un nombre entiers égal à 0 ou 1,

avec les conditions supplémentaires selon lesquelles :

+ quand t = 0, le symbole Y est alors un radical monovalent $Y^1$ représentant le groupement de formule :

$Y^1$ : 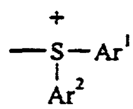

où les symboles $Ar^1$ et $Ar^2$ possèdent les significations données ci-avant,

+ quand t = 1 :

✪ d'une part, le symbole Y est alors un radical divalent ayant les significations $Y^2$ à $Y^4$ suivantes :

• $Y^2$ : un groupement de formule :

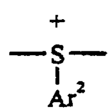

où le symbole $Ar^2$ possède les significations données ci-avant,

• $Y^3$ : un lien valentiel simple,
• $Y^4$ : un reste divalent choisi parmi :

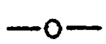 , 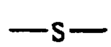 , 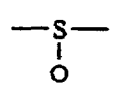 , 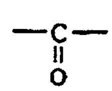 ,

un reste alkylène linéaire ou ramifié en $C_1$-$C_{12}$, et un reste de formule

$$—Si(CH_3)_2O—\ ,$$

✪ d'autre part, dans le cas uniquement où le symbole Y représente $Y^3$ ou $Y^4$, les radicaux $Ar^1$ et $Ar^2$ (terminaux) possèdent, outre les significations données ci-avant, la possibilité

d'être reliés entre eux par le reste Y' consistant dans $Y'^1$ un lien valentiel simple ou dans $Y'^2$ un reste divalent choisi parmi les restes cités à propos de la définition de $Y^4$, qui est installé entre les atomes de carbone, se faisant face, situés sur chaque cycle aromatique en position ortho par rapport à l'atome de carbone directement relié au cation $S^+$ ;

→ 3.2. et/ou au moins une espèce monosulfonium possédant un seul centre cationique $S^+$ par mole de cation et consistant dans la plupart des cas dans des espèces de formule :

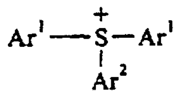

**(III.2)**

dans laquelle $Ar^1$ et $Ar^2$ ont les significations données ci-avant à propos de la formule (III.1), incluant la possibilité de relier directement entre eux un seul des radicaux $Ar^1$ à $Ar^2$ selon la manière indiquée ci-avant à propos de la définition de la condition supplémentaire en vigueur quand t = 1 dans la formule (II), faisant appel au reste Y' ;

4) les sels organométalliques de formule (**IV**) :

$$(L^1L^2L^3M)^{+q} \qquad (\mathbf{IV})$$

formule dans laquelle :

- M représente un métal du groupe 4 à 10, choisi parmi du fer, manganèse, chrome, cobalt,
- $L^1$ représente 1 ligand lié au métal M par des électrons π, ligand choisi parmi les ligands $\eta^3$-alkyl, $\eta^5$- cyclopendadiènyl et $\eta^7$ cycloheptratriènyl et les composés $\eta^6$ - aromatiques choisis parmi les ligands $\eta^6$-benzène éventuellement substitués et les composés ayant de 2 à 4 cycles condensés, chaque cycle étant capable de contribuer à la couche de valence du métal M par 3 à 8 électrons π,
- $L^2$ représente un ligand lié au métal M par des électrons π, ligand choisi parmi les ligands $\eta^7$-cycloheptatriènyï et les composés $\eta^6$-aromatiques choisis parmi les ligands $\eta^6$- benzène éventuellement substitués et les composés ayant de 2 à 4 cycles condensés, chaque cycle étant capable de contribuer à la couche de valence du métal M par 6 ou 7 électrons π,
- $L^3$ représente de 0 à 3 ligands identiques ou différents liés au métal M par des électrons σ, ligand (s) choisi(s) parmi CO et $NO_2^+$ ; la charge électronique totale q du complexe à laquelle contribuent $L^1$, $L^2$ et $L^3$ et la charge ionique du métal M étant positive et égale à 1 ou 2 ;

□ *l'entité anionique* borate ayant pour formule :

$$[BX_aR_b]^-$$

formule dans laquelle :

- a et b sont des nombres entiers allant pour a de 0 à 3 et pour b de 1 à 4 avec a + b =4,
- les symboles X représentent :
  - * un atome d'halogène avec a = 0 à 3,
  - * une fonction OH avec a = 0 à 2,
- les symboles R sont identiques ou différents et représentent :
  - ▷ un radical phényle substitué par au moins un groupement électroattracteur tel que $OCF_3$, $CF_3$, $NO_2$, CN, et/ou par au moins 2 atomes d'halogène, ce lorsque l'entité cationique est un onium d'un élément des groupes 15 à 17
  - ▷ un radical phényle substitué par au moins un élément ou un groupement électroattracteur tel qu'atome d'halogène, $CF_3$, $OCF_3$, $NO_2$, CN, et ce lorsque l'entité cationique est un complexe

organométallique d'un élément des groupes 4 à 10

▷ un radical aryle contenant au moins deux noyaux aromatiques tel que biphényle, naphtyle, éventuellement substitué par au moins un élément ou un groupement électroattracteur tel qu'un atome d'halogène $OCF_3$, $CF_3$, $NO_2$, CN, quelle que soit l'entité cationique,

(2i) le POS qui comporte au moins un oligomère et/ou un polymère et comprend au moins un groupement (organo)fonctionnel de pontage réticulable par voie cationique ($G_{fp}$) est sélectionné parmi les POS qui sont :

→ soit linéaires ou sensiblement linéaires et constitués de motifs de formule (**V**), terminés par des motifs de formule **(VI)**,
→ soit cycliques et constitués par des motifs de formule (**V**) :

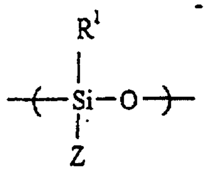 (V) 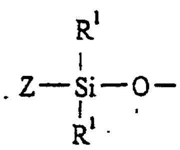 (VI)

formules dans lesquelles :

- les symboles $R^1$ sont semblables ou différents et représentent.:
  - soit un radical alklyle linéaire ou ramifié en $C_1$-$C_6$, éventuellement substitué, avantageusement par un ou des halogènes,
  - soit un radical cycloalkyle en $C_5$-$C_8$, éventuellement substitué,
  - soit un radical aryle ou aralkyle, éventuellement substitué notamment par des halogènes et/ou des alcoxyles,
- les symboles Z sont semblables ou différents et représentent :
  - soit le radical $R^1$,
  - soit un groupement $Gf_p$ correspondant à un reste époxyde ou vinyléther relié au silicium par l'intermédiaire d'un radical divalent contenant de 2 à 20 atomes de carbone comportant, éventuellement, un hétéroatome,

  l'un au moins des symboles Z correspondant à un groupement $G_{fp}$; et

(3i) les $G_{fp}$; du type époxyde et/ou vinyéther; sont présents, à raison (exprimé en éq par kg de POS) d'au moins 0,01.

**2.** Utilisation selon la revendication 1, **caractérisée en ce que** le POS a une viscosité η (exprimée en mPa.s à 25° C) comprise entre 200 et 3000.

**3.** Utilisation selon la revendication 1, **caractérisée en ce que** le POS a une viscosité η (exprimée en mPa.s à 25°C) comprise entre une valeur supérieure à 3000 et 10.000.

**4.** Utilisation selon l'une quelconque des revendications 1 à 3, **caractérisée en ce que** le (photo)amorceur (PA) comprend une entité anionique borate sélectionnée parmi le groupe suivant :

$[B(C_6F_5)_4]^-$ $[B(C_6H_4CF_3)_4]^-$ $[B(C_6H_3(CF_3)_2)_4]^-$

$[(C_6F_5)_2BF_2]^-$ $[C_6F_5BF_3]^-$ $[B(C_6H_3F_2)_4]^-$, $[B(C_6F_{40}CF_3)_4]^-$

et leurs mélanges.

**5.** Utilisation selon l'une quelconque des revendications 1 à 4, **caractérisé en ce que** l'entité cationique du PA est du type onium et est choisie parmi suivantes

$[(\Phi)_2I]^+$ $[C_8H_{17}\text{-O-}\Phi\text{-I-}\Phi]^+$ $[(\Phi\text{-}CH_3)_2I]^+$

$[C_{12}H_{25}\text{-}\Phi\text{-I-}\Phi]^+$ $[(C_8H_{17}\text{-O-}\Phi)_2I]^+$ $[(C_8H_{17}\text{-O-}\Phi\text{-I-}\Phi)]^+$

$[(\Phi)_3S]^+$ $[(\Phi)_2\text{-S-}\Phi\text{-O-}C_8H_{17}]^+$ $[(CH_3\text{-}\Phi\text{-I-}\Phi\text{-}CH(CH_3)_2]^+$

$[\Phi\text{-S-}\Phi\text{-S-}(\Phi)_2]^+$ $[(C_{12}H_{25}\text{-}\Phi)_2I]^+$ $[(CH_3\text{-}\Phi\text{-I-}\Phi\text{-}OC_2H_5]^+$

**6.** Utilisation seion l'une quelconque des revendications 1 à 4, **caractérisée en ce que** l'entité cationique du PA est un sel organométallique choisi dans le groupe suivant :

- le ($\eta^5$ - cyclopentadiènyle) ($\eta^6$ - toluène) $Fe^+$
- le ($\eta^5$ - cyclopentadiènyle) ($\eta^6$ - méthyl-1-naphtalène) $Fe^+$
- le ($\eta^5$ - cyclopentadiènyle) ($\eta^6$ - cumène) $Fe^+$
- le bis ($\eta^6$ - mesitylène) $Fe^+$
- le bis ($\eta^6$ - benzène) $Cr^+$

**7.** Utilisation selon l'une quelconque des revendications 1 à 6, **caractérisée en ce que** le PA est un borate d'onium et/ou un borate de sels organométalliques choisi dans le groupe suivant :

$[(\Phi)_2I]^+, [B(C_6F_5)_4]^-$ $[(C_8H_{17})\text{-O-}\Phi\text{-I-}\Phi)]^+, [B(C_6F_5)_4]^-$

$[C_{12}H_{25}\text{-}\Phi\text{-I-}\Phi]^+, [B(C_6F_5)_4]^-$ $[(C_8H_{17}\text{-O-}\Phi)_2I]^+, [B(C_6F_5)_4]^-$

$[(C_8H_{17})\text{-O-}\Phi\text{-I-}\Phi)]^+, [B(C_6F_5)_4]^-$ $[(\Phi)_3S]^+, [B(C_6F_5)_4]^-$

$[(\Phi)_2S\text{-}\Phi\text{-O-}C_8H_{17}]^+, [B(C_6H_4CF_3)_4]^-$ $[(C_{12}H_{25}\text{-}\Phi)_2I]^+, [B(C_6F_5)_4]^-$

$[(\Phi)_3S]^+, [B(C_6F_4OCF_3)_4]^-$ $[(\Phi\text{-}CH_3)_2I]^+, [B(C_6F_5)_4]^-$

$[(\Phi\text{-}CH_3)_2I]^+, [B(C_6F_4OCF_3)_4]^-$

. ($\eta^5$ - cyclopentadiènyle) ($\eta^6$ - toluène) $Fe^+$, $[B(C_6F_5)_4]^-$
. ($\eta^5$ - cyclopentadiènyle) ($\eta^6$ - méthyll-naphtalène) $Fe^+$, $[B(C_6F_5)_4]^-$
. ($\eta^5$ - cyclopentadiènyle) ($\eta^6$ - cumène) $Fe^+$, $[B(C_6F_5)_4]^-$

**8.** Utilisation selon l'une quelconque des revendications 1 à 7, **caractérisé en ce que** l'amorceur (PA) est employé en solution dans un solvant organique choisi parmi les solvants donneurs de protons.

**9.** Utilisation selon l'une quelconque des revendications 1 à 8, **caractérisée en ce que** le support récepteur du revêtement silicone obtenu par réticulation par voie cationique est un joint plat, notamment un joint de culasse

° qui est préalablement imprégné par au moins un matériau d'étanchéification formé par au moins un polymère réticulé
° et/ou qui est préalablement revêtu par au moins une couche d'au moins un élastomère.

**10.** Utilisation selon l'une quelconque des revendications 1 à 9, **caractérisée en ce que** le revêtement obtenu par réticulation par voie cationique est mono ou multicouche et présente une épaisseur comprise entre 1 et 100 µm.

**11.** Procédé de réalisation d'imprégnation(s) et/ou de revêtement(s) antiadhésif(s) à l'interface bloc moteur/culasse de moteurs sur des supports constitués par des joints plats, notamment des joints de culasse, **caractérisé en ce qu'**il consiste essentiellement :

(1) à appliquer une composition telle que définie dans l'une quelconque des revendications 1 à 10, relative à l'utilisation :

- soit directement sur la surface nue du joint plat, notamment du joint de culasse,
- soit sur le joint plat, notamment le joint de culasse, préalablement imprégné par au moins un matériau d'étanchéification formé par au moins un polymère réticulé,
- soit sur le joint plat, notamment le joint de culasse, préalablement imprégné par au moins un matériau d'étanchéification formé par au moins un polymère réticulé, et préalablement revêtu par au moins une couche d'au moins un élastomère ; et

(2) à faire réticuler la composition sous l'effet d'un rayonnement UV ayant une longueur d'onde comprise entre 200 et 400 nanomètres, couplé éventuellement à une thermoactivation par chauffage entre 25 et 100°C.

**12.** Joint plat, notamment joint de culasse **caractérisé en ce qu'**il est imprégné et/ou revêtu par une matrice obtenue par réticulation par voie cationique conformément à l'utilisation telle que définie dans les revendications 1 à 10 et/ou au procédé selon la revendication 11.

**Claims**

**1.** Use for carrying out impregnation(s) and/or for preparing coating (s) which is (are) antiadhesive employed at the engine block/cylinder head interface of engines and applied to sheet gaskets, in particular cylinder head gaskets, of compositions based on at least one polyorganosiloxane (POS) crosslinkable by the cationic route and on an effective catalytic amount of at least one initiator salt (PI), the said use being **characterized in that**:

(i) the initiator salt (PI) is formed by a borate of an onium of an element from groups 15 to 17 of the Periodic Classification [Chem. & Eng. News, Vol. 63, No. 5, 26 of 4 February 1985] or of an organometallic complex of an element from groups 4 to 10 of the Periodic Classification (same reference),

☐ *the cationic entity* of the said borate being chosen from:

1) - onium salts of the formula (I):

$$[(R^1)_n\text{-}A\text{-}(R^2)_m]^+ \qquad (\mathbf{I})$$

in which formula:

- A represents an element from groups 15 to 17, such as I, S, Se, P or N,
- $R^1$ represents a $C_6$-$C_{20}$ carbocyclic or heterocyclic aryl radical, it being possible for the said heterocyclic radical to comprise nitrogen or sulphur as heteroelements,
- $R^2$ represents $R^1$ or a linear or branched $C_1$-$C_{30}$ alkyl or alkenyl radical; the said $R^1$ and $R^2$ radicals optionally being substituted by a $C_1$-$C_{25}$ alkoxy, $C_1$-$C_{25}$ alkyl, nitro, chloro, bromo, cyano, carboxy, ester or mercapto group,
- n is an integer ranging from 1 to v + 1, v being the valency of the element A,
- m is an integer ranging from 0 to v - 1, with n + m = v + 1;

2) - oxoisothiochromanium salts having the formula:

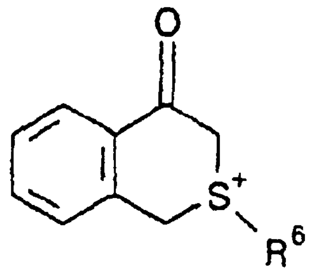

(III)

where the $R^6$ radical represents a linear or branched $C_1$-$C_{20}$ alkyl radical;
3) - sulphonium salts where the cationic entity comprises:

→ 3.1. at least one polysulphonium species of formula III.1

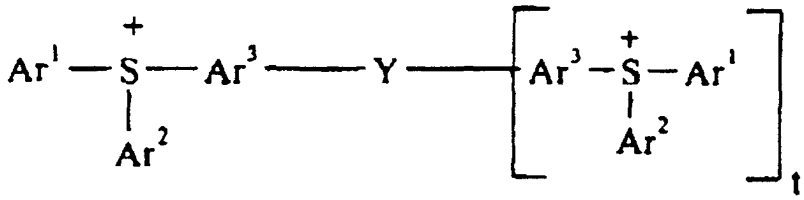

(III.1)

in which:

- the $Ar^1$ symbols, which can be identical to or different from one another, each represent a monovalent phenyl or naphthyl radical optionally substituted with one or more radicals chosen from: a linear or branched $C_1$-$C_{12}$ alkyl radical, a linear or branched $C_1$-$C_{12}$ alkoxy radical, a halogen atom, an -OH group, a -COOH group, a -COO-alkyl ester group, where the alkyl part is a linear or branched $C_1$-$C_{12}$ residue, and a group of formula -$Y^4$-$Ar^2$, where the $Y^4$ and $Ar^2$ symbols have the meanings given immediately below,
- the $Ar^2$ symbols, which can be identical to or different from one another or $Ar^1$, each represent a monovalent phenyl or naphthyl radical optionally substituted with one or more radicals chosen from: a linear or branched $C_1$-$C_{12}$ alkyl radical, a linear or branched $C_1$-$C_{12}$ alkoxy radical, a halogen atom, an -OH group, a -COOH group or a -COO-alkyl ester group, where the alkyl part is a linear or branched $C_1$-$C_{12}$ residue,
- the $Ar^3$ symbols, which can be identical to or different from one another, each represent a divalent phenylene or naphthylene radical optionally substituted with one or more radicals chosen from: a linear or branched $C_1$-$C_{12}$ alkyl radical, a linear or branched $C_1$-$C_{12}$ alkoxy radical, a halogen atom, an -OH group, a -COOH group or a -COO-alkyl ester group, where the alkyl part is a linear or branched $C_1$-$C_{12}$ residue,
- t is an integer equal to 0 or 1,

with the additional conditions according to which:

+ when t = 0, the Y symbol is then a $Y^1$ monovalent radical representing the group of formula:

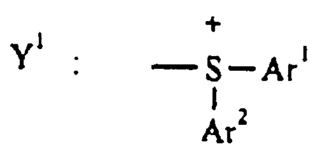

where the $Ar^1$ and $Ar^2$ symbols have the meanings given above,

+ when t = 1:

  * on the one hand, the Y symbol is then a divalent radical having the following meanings

$Y^2$ to $Y^4$ :

- $Y^2$: a group of formula:

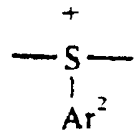

where the $Ar^2$ symbol has the meanings given above,
- $Y^3$: a single valency bond,
- $Y^4$: a divalent residue chosen from:

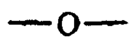 , 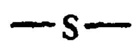 , 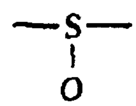 , 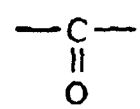 ,

a linear or branched $C_1$-$C_{12}$ alkylene residue and a residue of formula $-Si(CH_3)_2O-$,

* on the other hand, solely in the case where the Y symbol represents $Y^3$ or $Y^4$, the $Ar^1$ and $Ar^2$ (terminal) radicals have, in addition to the meanings given above, the possibility of being connected to one another via the Y' residue consisting of $Y'^1$, a single valency bond, or of $Y'^2$, a divalent residue chosen from the residues cited with respect to the definition of $Y^4$, which is inserted between the carbon atoms, facing each other, situated on each aromatic ring in the ortho position with respect to the carbon atom directly bonded to the $S^+$ cation;

→ 3.2. and/or at least one monosulphonium species having a single $S^+$ cationic centre per mole of cation and comprising, in the majority of cases, species of formula:

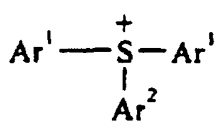 (III.2)

in which $Ar^1$ and $Ar^2$ have the meanings given above with respect to the formula (III.1), including the possibility of connecting directly between them only one of the $Ar^1$ radicals to $Ar^2$ according to the way indicated above with respect to the definition of the additional condition in force when t=1 in the formula (II) involving the Y' residue;

4) - organometallic salts of formula (IV):

$$(L^1L^2L^3M)q^+ \qquad \text{(IV)}$$

in which formula:

- M represents a metal from group 4 to 10 chosen from iron, manganese, chromium or cobalt,
- $L^1$ represents a ligand bonded to the metal M via π electrons, which ligand is chosen from $\eta^3$-alkyl, $\eta^5$-cyclopentadienyl and $\eta^7$-cycloheptatrienyl ligands and $\eta^6$-aromatic compounds chosen from optionally substituted $\eta^6$-benzene ligands and compounds having from 2 to 4 condensed rings, each ring being capable of contributing to the valency layer of the metal M via 3 to 8 π electrons,

- $L^2$ represents a ligand bonded to the metal M via π electrons, which ligand is chosen from $\eta^7$-cycloheptatrienyl ligands and $\eta^6$-aromatic compounds chosen from optionally substituted $\eta^6$-benzene ligands and compounds having from 2 to 4 condensed rings, each ring being capable of contributing to the valency layer of the metal M via 6 or 7 π electrons,
- $L^3$ represents from 0 to 3 identical or different ligands bonded to the metal M via σ electrons, which ligand(s) is(are) chosen from CO and $NO_2^+$; the total electronic charge q of the complex to which $L^1$, $L^2$ and $L^3$ and the ionic charge of the metal M contribute being positive and equal to 1 or 2;

☐ *the anionic entity* of the said borate having the formula:

$$[BX_aRb]^-$$

in which formula:

- a and b are integers ranging from 0 to 3 for a and from 1 to 4 for b, with a + b = 4,
- the X symbols represent:

  * a halogen atom with a = 0 to 3,
  * an OH functional group with a = 0 to 2,

- the R symbols are identical or different and represent:

  Δ a phenyl radical substituted by at least one electron-withdrawing group, such as $OCF_3$, $CF_3$, $NO_2$ or CN, and/or by at least 2 halogen atoms, this being when the cationic entity is an onium of an element from groups 15 to 17,

  Δ a phenyl radical substituted by at least one electron-withdrawing element or group, such as a halogen atom, $CF_3$, $OCF_3$, $NO_2$ or CN, this being when the cationic entity is an organometallic complex of an element from groups 4 to 10,

  Δ an aryl radical comprising at least two aromatic nuclei, such as biphenyl or naphthyl, which is optionally substituted by at least one electron-withdrawing element or group, such as a halogen atom, $OCF_3$, $CF_3$, $NO_2$ or CN, whatever the cationic entity;

(2i) the POS, which comprises at least one oligomer and/or one polymer and comprises at least one (organo) functional bridging group crosslinkable by the cationic route ($G_{fp}$) is selected from the POSs which are:

→ either linear or substantially linear and composed of units of formula (V), terminated by units of formula (VI),
→ or cyclic and composed of units of formula (V):

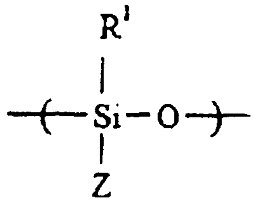 (V)

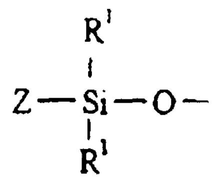 (VI)

in which formulae:

- the $R^1$ symbols are alike or different and represent:

  - either a linear or branched $C_1$-$C_6$ alkyl radical which is optionally substituted, advantageously by one or more halogens,
  - or an optionally substituted $C_5$-$C_8$ cycloalkyl radical,
  - or an aryl or aralkyl radical which is optionally substituted, in particular by halogens and/or alkoxys,

- the Z symbols are alike or different and represent:

- either the $R^1$ radical,
- or a $G_{fp}$ group corresponding to an epoxide or vinyl ether residue connected to the silicon via a divalent radical comprising from 2 to 20 carbon atoms optionally comprising a heteroatom,

at least one of the Z symbols corresponding to a $G_{fp}$ group, and

(3i) the $G_{fp}$s of the epoxide and/or vinyl ether type, are present in a proportion (expressed in eq per kg of POS) of at least 0.01

**2.** Use according to claim 1, **characterized in that** the POS has a viscosity $\eta$ (expressed in mPa.s at 25°C) of between 200 and 3000.

**3.** Use according to claim 1, **characterized in that** the POS has a viscosity $\eta$ (expressed in mPa.s at 25°C) of between a value of greater than 3000 and 10,000.

**4.** Use according to any one of claims 1 to 3, **characterized in that** the (photo)initiator (PI) comprises a borate anionic entity selected from the following group:

$[B(C_6F_5)_4]^-$ $[B(C_6H_4CF_3)_4]^-$ $[B(C_6H_3(CF_3)_2)_4]^-$

$[(C_6F_5)_2BF_2]^-$ $[C_6F_5BF_3]^-$ $[B(C_6H_3F_2)_4]^-$, $[B(C_6F_{40}CF_3)_4]^-$

and their mixtures.

**5.** Use according to any one of claims 1 to 4, **characterized in that** the cationic entity of the PI is of the onium type and is chosen from the following entities:

$[(\Phi)_2I]^+$ $[C_8H_{17}\text{-O-}\Phi\text{-I-}\Phi]^+$ $[(\Phi\text{-}CH_3)_2I]^+$

$[C_{12}H_{25}\text{-}\Phi\text{-I-}\Phi]^+$ $[(C_8H_{17}\text{-O-}\Phi)_2I]^+$ $[(C_8H_{17}\text{-O-}\Phi\text{-I-}\Phi)]^+$

$[(\Phi)_3S]^+$ $[(\Phi)_2\text{-S-}\Phi\text{-O-}C_8H_{17}]^+$ $[(CH_3\text{-}\Phi\text{-I-}\Phi\text{-}CH(CH_3)_2]^+$

$[\Phi\text{-S-}\Phi\text{-S-}(\Phi)_2]^+$ $[(C_{12}H_{25}\text{-}\Phi)_2I]^+$ $[(CH_3\text{-}\Phi\text{-I-}\Phi\text{-}OC_2H_5]^+$

**6.** Use according to any one of claims 1 to 4, **characterized in that** the cationic entity of the PI is an organometallic salt chosen from the following group:

- ($\eta^5$-cyclopentadienyl) ($\eta^6$-toluene) $Fe^+$
- ($\eta^5$-cyclopentadienyl) ($\eta^6$-1-methyl-naphthalene)$Fe^+$
- ($\eta^5$-cyclopentadienyl) ($\eta^6$-cumene)$Fe^+$
- bis($\eta^6$-mesitylene)$Fe^+$
- bis($\eta^6$-benzene)$Cr^+$.

**7.** Use according to any one of claims 1 to 6, **characterized in that** the PI is an onium borate and/or a borate of organometallic salts chosen from the following group:

$[(\Phi)_2I]^+$, $[B(C_6F_5)_4]^-$ $[(C_8H_{17})\text{-O-}\Phi\text{-I-}\Phi)]^+$, $[B(C_6F_5)_4]^-$

$[C_{12}H_{25}\text{-}\Phi\text{-I-}\Phi]^+$, $[B(C_6F_5)_4]^-$ $[(C_8H_{17}\text{-O-}\Phi)_2I]^+$, $[B(C_6F_5)_4]^-$

$[(C_8H_{17})\text{-O-}\Phi\text{-I-}\Phi)]^+, [B(C_6F_5)_4]^-$   $[(\Phi)_3S]^+, [B(C_6F_5)_4]^-$

$[(\Phi)_2S\text{-}\Phi\text{-O-}C_8H_{17}]^+, [B(C_6H_4CF_3)_4]^-$   $[(C_{12}H_{25}\text{-}\Phi)_2I]^+, [B(C_6F_5)_4]^-$

$[(\Phi)_3S]^+, [B(C_6F_4OCF_3)_4]^-$   $[(\Phi\text{-}CH_3)_2I]^+, [B(C_6F_5)_4]^-$

$[(\Phi\text{-}CH_3)_2I]^+, [B(C_6F_4OCF_3)_4]^-$

. ($\eta^5$-cyclopentadienyl) ($\eta^6$-toluene) $Fe^+$ $[B(C_6F_5)_4]^-$
. ($\eta^5$-cyclopentadienyl) ($\eta^6$-methylnaphtalene) - $Fe^+$ $[B(C_6F_5)_4]^-$
. ($\eta^5$-cyclopentadienyl) ($\eta^6$-cumene) $Fe^+$ $[B(C_6F_5)_4]^-$.

**8.** Use according to any one of claims 1 to 7, **characterized in that** the initiator (PI) is employed in solution in an organic solvent chosen from proton-donating solvents.

**9.** Use according to any one of claims 1 to 8, **characterized in that** the support receiving the silicone coating obtained by crosslinking by the cationic route is a sheet gasket, in particular a cylinder head gasket,

° which is preimpregnated with at least one material for rendering leaktight formed by at least one crosslinked polymer
° and/or which is precoated with at least one layer of at least one elastomer.

**10.** Use according to any one of claims 1 to 9, **characterized in that** the coating obtained by crosslinking by the cationic route is mono- or multilayer and exhibits a thickness of between 1 and 100 µm.

**11.** Process for carrying out impregnation(s) and/or for preparing coating(s) which is (are) antiadhesive at the engine block/cylinder head interface of engines on supports composed of sheet gaskets, in particular cylinder head gaskets, **characterized in that** it consists essentially:

(1) in applying a composition as defined in any one of claims 1 to 10 relating to the use:

- either directly to the bare surface of the sheet gasket, in particular of the cylinder head gasket,
- or to the sheet gasket, in particular the cylinder head gasket, preimpregnated with at least one material for rendering leaktight formed by at least one crosslinked polymer,
- or to the sheet gasket, in particular the cylinder head gasket, preimpregnated with at least one material for rendering leaktight formed by at least one crosslinked polymer and precoated with at least one layer of at least one elastomer; and

(2) in crosslinking the composition under the effect of UV radiation having a wave length of between 200 and 400 nanometres, optionally coupled to a thermal activation by heating between 25 and 100°C.

**12.** Sheet gasket, in particular cylinder head gasket, **characterized in that** it is impregnated and/or coated with a matrix obtained by crosslinking by the cationic route in accordance with the use as defined in claims 1 to 10 and/or with the process according to claim 11.

**Patentansprüche**

**1.** Verwendung von Zusammensetzungen auf der Basis von mindestens einem auf kationischem Weg und einer katalytisch wirksamen Menge von mindestens einem Initiator-Salz vernetzbaren Polyorganosiloxan (POS) für die Realisierung von nichthaftenden Imprägnierungen und/oder Überzügen, eingesetzt an der Zwischenfläche von Motorblock/Zylinderkopf und angewendet als Flachdichtungen, insbesondere als Zylinderkopfdichtungen, wobei die genannte Verwendung **dadurch gekennzeichnet ist, daß**

(i) das Initiator-Salz (PA) durch ein Onium-Borat eines Elementes der Gruppen 15 bis 17 des Periodensystems [Chem. & Eng. News, Vol. 63, No.5,26 vom 4. Februar 1985] oder eines Organometall-Komplexes eines Elementes der Gruppen 4 bis 10 des Periodensystems (gleiche Referenz) gebildet wird,

□ wobei die kationische Einheit des genannten Borates ausgewählt wird unter:

1) - den Onium-Salzen der Formel (I)

$$[(R^1)_n\text{-}A\text{-}(R^2)_m]^+ \qquad (I)$$

in der

- A ein Element der Gruppen 15 bis 17 darstellt, wie I, S, Se, P oder N;
- $R^1$ einen carbocyclischen oder heterocyclischen Rest Aryl mit 6 bis 20 Kohlenstoffatomen bedeutet, wobei der genannte heterocyclische Rest als Heteroelemente Stickstoff oder Schwefel enthalten kann;
- $R^2$ gleich $R^1$ ist oder einen linearen oder verzweigten Rest Alkyl oder Alkenyl mit 1 bis 30 Kohlenstoffatomen darstellt; wobei die genannten Reste $R^1$ und $R^2$ gegebenenfalls substituiert sind durch eine Gruppe Alkoxy mit 1 bis 25 Kohlenstoffatomen, Alkyl mit 1 bis 25 Kohlenstoffatomen, Nitro, Chlor, Brom, Cyano, Carboxy, Ester, Mercapto,
- n eine ganze Zahl von 1 bis v + 1 ist, wobei v die Valenz des Elementes A bedeutet,
- m eine ganze Zahl von 0 bis v - 1 ist, mit n + m = v + 1;

2) - den Oxoisothiochromanium-Salzen der Formel (II)

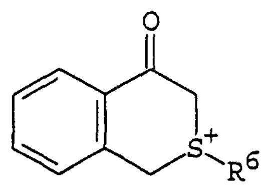

(II)

worin der Rest $R^6$ einen linearen oder verzweigten Rest Alkyl mit 1 bis 20 Kohlenstoffatomen darstellt;
3) - den Sulfonium-Salzen, in denen die kationische Einheit umfaßt:

→ 3.1 mindestens eine Art Polysulfonium der Formel (III.1)

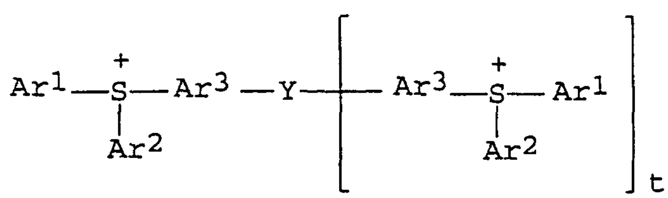

(III.1)

in der

- die Symbole $Ar^1$, die untereinander gleich oder verschieden sein können, jeweils einen monovalenten Rest Phenyl oder Naphthyl darstellen, gegebenenfalls substituiert mit einem oder mehreren Resten, ausgewählt unter : einem linearen oder verzweigten Rest Alkyl mit 1 bis 12 Kohlenstoffatomen, einem linearen oder verzweigten Rest Alkoxy mit 1 bis 12 Kohlenstoffatomen, einem Halogenatom, einer Gruppe -OH, einer Gruppe -COOH, einer Estergruppe -COO-Alkyl, worin der Teil Alkyl ein linearer oder verzweigter Rest mit 1 bis 12 Kohlenstoffatomen ist, und einer Gruppe der Formel $-Y^4\text{-}Ar^2$, worin die Symbole $Y^4$ und $Ar^2$ genau

die nachstehend angegebenen Bedeutungen besitzen,

- die Symbole $Ar^2$, die untereinander oder mit $Ar^1$ gleich oder verschieden sein können, jeweils einen monovalenten Rest Phenyl oder Naphthyl darstellen, gegebenenfalls substituiert mit einem oder mehreren Resten, ausgewählt unter: einem linearen oder verzweigten Rest Alkyl mit 1 bis 12 Kohlenstoffatomen, einem linearen oder verzweigten Rest Alkoxy mit 1 bis 12 Kohlenstoffatomen, einem Halogenatom, einer Gruppe -OH, einer Gruppe -COOH, einer Estergruppe -COO-Alkyl, worin der Teil Alkyl ein linearer oder verzweigter Rest mit 1 bis 12 Kohlenstoffatomen ist,
- die Symbole $Ar^3$, die untereinander gleich oder verschieden sein können, jeweils einen divalenten Rest Phenylen oder Naphthylen darstellen, gegebenenfalls substituiert mit einem oder mehreren Resten, ausgewählt unter: einem linearen oder verzweigten Rest Alkyl mit 1 bis 12 Kohlenstoffatomen, einem linearen oder verzweigten Rest Alkoxy mit 1 bis 12 Kohlenstoffatomen, einem Halogenatom, einer Gruppe -OH, einer Gruppe -COOH, einer Estergruppe -COO-Alkyl, worin der Teil Alkyl ein linearer oder verzweigter Rest mit 1 bis 12 Kohlenstoffatomen ist,
- t eine ganze Zahl von 0 oder 1 ist,

mit den zusätzlichen Bedingungen, gemäß denen:

+ wenn t = 0 ist, das Symbol Y dann einen monovalenten Rest $Y^1$ bedeutet, der die Gruppe der Formel

$Y^1$ : 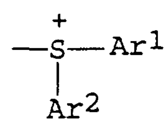

darstellt, worin die Symbole $Ar^1$ und $Ar^2$ die oben angegebenen Bedeutungen besitzen,

+ wenn t = 1 ist:

✪ einerseits das Symbol Y dann einen divalenten Rest mit den folgenden Bedeutungen $Y^2$ bis $Y^4$ darstellt:

. $Y^2$ : einer Gruppe der Formel :

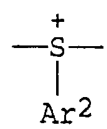

worin das Symbol $Ar^2$ die oben angegebenen Bedeutungen besitzt,

. $Y^3$ : einer einfachen Valenzbindung,

. $Y^4$ : einem divalenten Rest, ausgewählt unter:

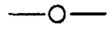 , 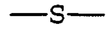 , 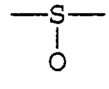 , 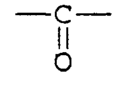

einem linearem oder verzweigten Rest Alkylen mit 1 bis 12 Kohlenstoffatomen und einem Rest der Formel $-Si(CH_3)_2O-$,

✪ andererseits, in dem einzigen Fall, wo das Symbol Y $Y^3$ oder $Y^4$ darstellt, die Reste $Ar^1$ und $Ar^2$ (endständig) außer den oben angegebenen Bedeutungen die Möglichkeit besitzen, untereinander durch den Rest Y' verbunden zu sein, der in $Y'^1$ einer einfachen Valenzbindung oder in $Y'^2$ einem divalenten Rest besteht, ausgewählt unter den oben

bei der Definition von $Y^4$ angegebenen Resten, die zwischen den Kohlenstoffatomen sich gegenüber liegend angeordnet sind und sich an jedem aromatischen Ring in Position ortho in bezug auf das direkt an das Kation $S^+$ gebundene Kohlenstoffatom befinden;

→ 3.2 und/oder mindestens eine Art Monosulfonium, die ein einziges kationisches Zentrum $S^+$ pro Mol Kation besitzt und in der Mehrzahl der Fälle aus Arten der Formel (III.2)

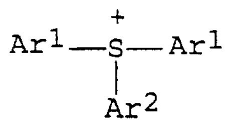

(III.2)

besteht, in der $Ar^1$ und $Ar^2$ die oben bei der Formel (III.1) angegebenen Bedeutungen besitzen, einschließlich der Möglichkeit, direkt untereinander, $Ar^1$ mit $Ar^2$ verbunden zu sein, gemäß der oben bei der Definition der zusätzlichen Bedingungen angegebenen Art und Weise, wenn t = 1 gilt in der Formel (II), wobei dann auf den Rest Y' zurückgegriffen wird;

4) den Organometall-Salzen der Formel (IV)

$$(L^1L^2L^3M)^{+q} \qquad (IV)$$

in der

- M ein Metall der Gruppe 4 bis 10 darstellt, ausgewählt unter Eisen, Mangan, Chrom, Cobalt,
- $L^1$ einen an das Metall M durch π-Elektronen gebundenen Liganden bedeutet, wobei der Ligand ausgewählt wird unter den Liganden $\eta^3$-Alkyl, $\eta^5$-Cyclopentadienyl und $\eta^7$-Cycloheptatrienyl und den $\eta^6$-aromatischen Verbindungen, ausgewählt unter den Liganden $\eta^6$-Benzol, gegebenenfalls substituiert, und den Verbindungen mit 2 bis 4 kondensierten Ringen, wobei jeder Ring fähig ist, an der Abdeckung der Valenz des Metalls M durch 3 bis 8 π-Elektronen beizutragen,
- $L^2$ einen an das Metall M durch π-Elektronen gebundenen Liganden bedeutet, wobei der Ligand ausgewählt wird unter den Liganden $\eta^7$-Cycloheptatrienyl und den $\eta^6$-aromatischen Verbindungen, ausgewählt unter den Liganden $\eta^6$-Benzol, gegebenenfalls substituiert, und den Verbindungen mit 2 bis 4 kondensierten Ringen, wobei jeder Ring fähig ist, an der Abdeckung der Valenz des Metalls M durch 6 oder 7 π-Elektronen beizutragen,
- $L^3$ 0 bis 3 gleiche oder verschiedene an das Metall M durch σ-Elektronen gebundene Liganden darstellt, wobei der (die) Ligand(en) ausgewählt wird (werden) unter CO und $NO_2^+$, wobei die elektronische Gesamtladung q des Komplexes, zu der $L^1$, $L^2$ und $L^3$ beitragen, und die ionische Ladung des Metalls M positiv und gleich 1 oder 2 ist;

□ und die anionische Einheit Borat die Formel:

$$[BX_aR_b]^-$$

besitzt, in der

- a und b ganze Zahlen sind, für a von 0 bis 3 und für b von 1 bis 4 mit a + b = 4,
- die Symbole X darstellen:

* ein Halogenatom mit a = 0 bis 3,
* eine Funktion OH mit a = 0 bis 2,

- die Symbole R gleich oder verschieden sind und darstellen:

➢ einen Rest Phenyl, substituiert durch mindestens eine elektroattraktive Gruppe wie $OCF_3$, $CF_3$, $NO_2$, CN, und/oder mindestens zwei Halogenatome, wenn diese kationische Einheit ein

Onium eines Elementes der Gruppen 15 bis 17 ist,

➢ einen Rest Phenyl, substituiert durch mindestens ein Element oder eine elektroattraktive Gruppe wie ein Halogenatom, $CF_3$, $OCF_3$, $NO_2$, CN, und wenn diese kationische Einheit ein Organometall-Komplex eines Elementes der Gruppen 4 bis 10 ist,

➢ einen Rest Aryl, enthaltend mindestens zwei aromatische Kerne wie Biphenyl, Naphthyl, gegebenenfalls substituiert durch mindestens ein Element oder eine elektroattraktive Gruppe wie ein Halogenatom, $OCF_3$, $CF_3$, $NO_2$, CN, wie diese kationische Einheit auch sein mag,

(2i) das POS, das mindestens ein Oligomer und/oder ein Polymer umfaßt, auch mindestens eine (organo)-funktionelle Brücken-Gruppe aufweist, die auf kationischem Weg ($Gf_p$) vernetzbar ist, wobei es unter den POS ausgewählt wird, die sind:

→ linear oder im wesentlichen linear und bestehend aus Struktureinheiten der Formel (V), abgeschlossen durch Struktureinheiten der Formel (VI), oder
→ cyclisch und bestehend aus Struktureinheiten der Formel (V):

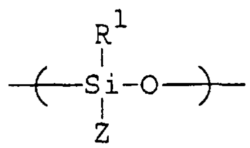 (V) 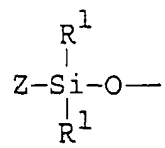 (VI)

in denen

. die Symbole $R^1$ gleich oder verschieden sind und darstellen:

- entweder einen linearen oder verzweigten Rest Alkyl mit 1 bis 6 Kohlenstoffatomen, gegebenenfalls substituiert, vorteilhafterweise durch ein oder mehrere Halogene, oder
- einen Rest Cycloalkyl mit 5 bis 8 Kohlenstoffatomen, gegebenenfalls substituiert, oder
- einen Rest Aryl oder Aralkyl, gegebenenfalls substituiert, insbesondere durch Halogene und/oder Alkoxyle,

. die Symbole Z gleich oder verschieden sind und darstellen:

- entweder den Rest $R^1$, oder
- eine Gruppe $Gf_p$, entsprechend einem Rest Epoxid oder Vinylether, verbunden mit dem Silicium über das Zwischenteil eines divalenten Restes mit 2 bis 20 Kohlenstoffatomen, der gegebenenfalls ein Heteroatom umfaßt,

wobei mindestens eines der Symbole Z einer Gruppe $Gf_p$ entspricht, und

(3i) die $Gf_p$ vom Typ Epoxid und/oder Vinylether im Verhältnis (ausgedrückt in Äquivalenten pro kg POS) von mindestens 0,01 anwesend sind.

**2.** Verwendung nach Anspruch 1, **dadurch gekennzeichnet, daß** das POS eine Viskosität $\eta$ (ausgedrückt in mPa. s bei 25°C) zwischen 200 und 3000 besitzt.

**3.** Verwendung nach Anspruch 1, **dadurch gekennzeichnet, daß** das POS eine Viskosität $\eta$ (ausgedrückt in mPa. s bei 25°C) zwischen einem Wert von höher als 3000 und 10000 besitzt.

**4.** Verwendung nach irgendeinem der Ansprüche 1 bis 3, **dadurch gekennzeichnet, daß** der (Photo)-Initiator (PA) eine anionische Borat-Einheit umfaßt, gewählt aus der folgenden Gruppe:

$[B(C_6F_5)_4]^-$ $[B(C_6H_4CF_3)_4]^-$ $[B(C_6H_3(CF_3)_2)_4]^-$

$$[(C_6F_5)_2BF_2]^- \quad [C_6F_5BF_3]^- \quad [B(C_6H_3F_2)_4]^- \quad [B(C_6F_4OCF_3)_4]^-$$

und ihren Mischungen.

**5.** Verwendung nach irgendeinem der Ansprüche 1 bis 4, **dadurch gekennzeichnet, daß** die kationische Einheit des PA vom Typ Onium ist und unter den folgenden Einheiten ausgewählt wird:

$$[(\Phi)_2I]^+ \quad [C_8H_{17}\text{-O-}\Phi\text{-I-}\Phi]^+ \quad [(\Phi\text{-}CH_3)_2I]^+$$

$$[C_{12}H_{25}\text{-}\Phi\text{-I-}\Phi]^+ \quad [(C_8H_{17}\text{-O-}\Phi)_2I]^+ \quad [(C_8H_{17}\text{-O-}\Phi\text{-I-}\Phi)]^+$$

$$[(\Phi)_3S]^+ \quad [(\Phi)_2\text{-S-}\Phi\text{-O-}C_8H_{17}]^+ \quad [(CH_3\text{-}\Phi\text{-I-}\Phi\text{-}CH(CH_3)_2]^+$$

$$[\Phi\text{-S-}\Phi\text{-S-}(\Phi)_2]^+ \quad [(C_{12}H_{25}\text{-}\Phi)_2I]^+ \quad [(CH_3\text{-}\Phi\text{-I-}\Phi\text{-}OC_2H_5]^+$$

**6.** Verwendung nach irgendeinem der Ansprüche 1 bis 4, **dadurch gekennzeichnet, daß** die kationische Einheit des PA ein Organometall-Salz ist, gewählt aus der folgenden Gruppe:

- ($\eta^5$-Cyclopentadienyl) ($\eta^6$-Toluol) $Fe^+$
- ($\eta^5$-Cyclopentadienyl) ($\eta^6$-Methyl-1-naphthalin) $Fe^+$
- ($\eta^5$-Cyclopentadienyl) ($\eta^6$-Cumol) $Fe^+$
- Bis- ($\eta^6$-Mesitylen) $Fe^+$
- Bis-($\eta^6$-Benzol) $Cr^+$

**7.** Verwendung nach irgendeinem der Ansprüche 1 bis 6, **dadurch gekennzeichnet, daß** das PA ein Onium-Borat und/oder ein Borat von Organometall-Salzen ist, gewählt aus der folgenden Gruppe:

$$[(\Phi)_2I]^+, [B(C_6F_5)_4]^- \quad [(C_8H_{17})\text{-O-}\Phi\text{-I-}\Phi)]^+, [B(C_6F_5)_4]^-$$

$$[C_{12}H_{25}\text{-}\Phi\text{-I-}\Phi]^+, [B(C_6F_5)_4]^- \quad [(C_8H_{17}\text{-O-}\Phi)_2I]^+, [B(C_6F_5)_4]^-$$

$$[(C_8H_{17})\text{-O-}\Phi\text{-I-}\Phi)]^+, [B(C_6F_5)_4]^- \quad [(\Phi)_3S]^+, [B(C_6F_5)_4]^-$$

$$[(\Phi)_2S\text{-}\Phi\text{-O-}C_8H_{17}]^+, [B(C_6H_4CF_3)_4]^- \quad [(C_{12}H_{25}\text{-}\Phi)_2I]^+, [B(C_6F_5)_4]^-$$

$$[(\Phi)_3S]^+, [B(C_6F_4OCF_3)_4]^- \quad [(\Phi\text{-}CH_3)_2I]^+, [B(C_6F_5)_4]^-$$

$$[(\Phi\text{-}CH_3)_2I]^+, [B(C_6F_4OCF_3)_4]^-$$

($\eta^5$-Cyclopentadienyl) ($\eta^6$-Toluol) $Fe^+$, $[B(C_6F_5)_4)]^-$
($\eta^5$-Cyclopentadienyl) ($\eta^6$-Methyl-1-naphthalin) $Fe^+$, $[B(C_6F_5)_4)]^-$
($\eta^5$-Cyclopentadienyl) ($\eta^6$-Cumol) $Fe^+$, $[B(C_6F_5)_4]^-$.

**8.** Verwendung nach irgendeinem der Ansprüche 1 bis 7, **dadurch gekennzeichnet, daß** der Initiator (PA) in Lösung in einem organischen Lösungsmittel, ausgewählt unter den protonen-abgebenden Lösungsmitteln, verwendet wird.

**9.** Verwendung nach irgendeinem der Ansprüche 1 bis 8, **dadurch gekennzeichnet, daß** der Aufnahmeträger für den durch Vernetzung auf kationischem Weg erhaltenen Silicon-Überzug eine Flachdichtung, insbesondere eine Zylinderkopfdichtung ist,

. die zuvor durch mindestens ein Material zur Abdichtung, gebildet durch mindestens ein vernetztes Polymer, imprägniert wird
. und/oder die zuvor durch mindestens eine Schicht aus mindestens einem Elastomer überzogen wird.

**10.** Verwendung nach irgendeinem der Ansprüche 1 bis 9, **dadurch gekennzeichnet, daß** der durch Vernetzung auf kationischem Weg erhaltene Überzug ein- oder mehrschichtig ist und eine Dicke zwischen 1 µm und 100 µm aufweist.

**11.** Verfahren für die Realisierung von Imprägnierungen und/oder Überzügen, die an der Zwischenfläche von Motorblock/Zylinderkopf auf den Trägern, bestehend aus Flachdichtungen, insbesondere aus Zylinderkopfdichtungen, nicht haften, **dadurch gekennzeichnet, daß** es im wesentlichen besteht aus:

(1) Aufbringen einer Zusammensetzung wie in irgendeinem der Ansprüche 1 bis 10 definiert, bezogen auf die Anwendung:

- entweder direkt auf die bloße Oberfläche der Flachdichtung, insbesondere der Zylinderkopfdichtung, oder
- auf die Flachdichtung, insbesondere die Zylinderkopfdichtung, die zuvor durch mindestens ein Material zur Abdichtung, gebildet durch mindestens ein vernetztes Polymer, imprägniert wurde,
- oder auf die Flachdichtung, insbesondere die Zylinderkopfdichtung, die zuvor durch mindestens ein Material zur Abdichtung, gebildet durch mindestens ein vernetztes Polymer, imprägniert wurde und zuvor durch mindestens eine Schicht aus mindestens einem Elastomer überzogen wurde; und
- Vernetzen der Zusammensetzung unter der Einwirkung einer UV-Strahlung mit einer Wellenlänge zwischen 200 nm und 400 nm, gegebenenfalls gekoppelt mit einer Thermoaktivierung durch Erhitzen zwischen 25 °C und 100 °C.

**12.** Flachdichtung, insbesondere Zylinderkopfdichtung, **dadurch gekennzeichnet, daß** sie mit einer Matrix, erhalten durch Vernetzung auf kationischem Weg in Übereinstimmung mit der Verwendung wie in den Ansprüchen 1 bis 10 definiert und/oder mit dem Verfahren gemäß Anspruch 11, imprägniert und/oder überzogen wird.

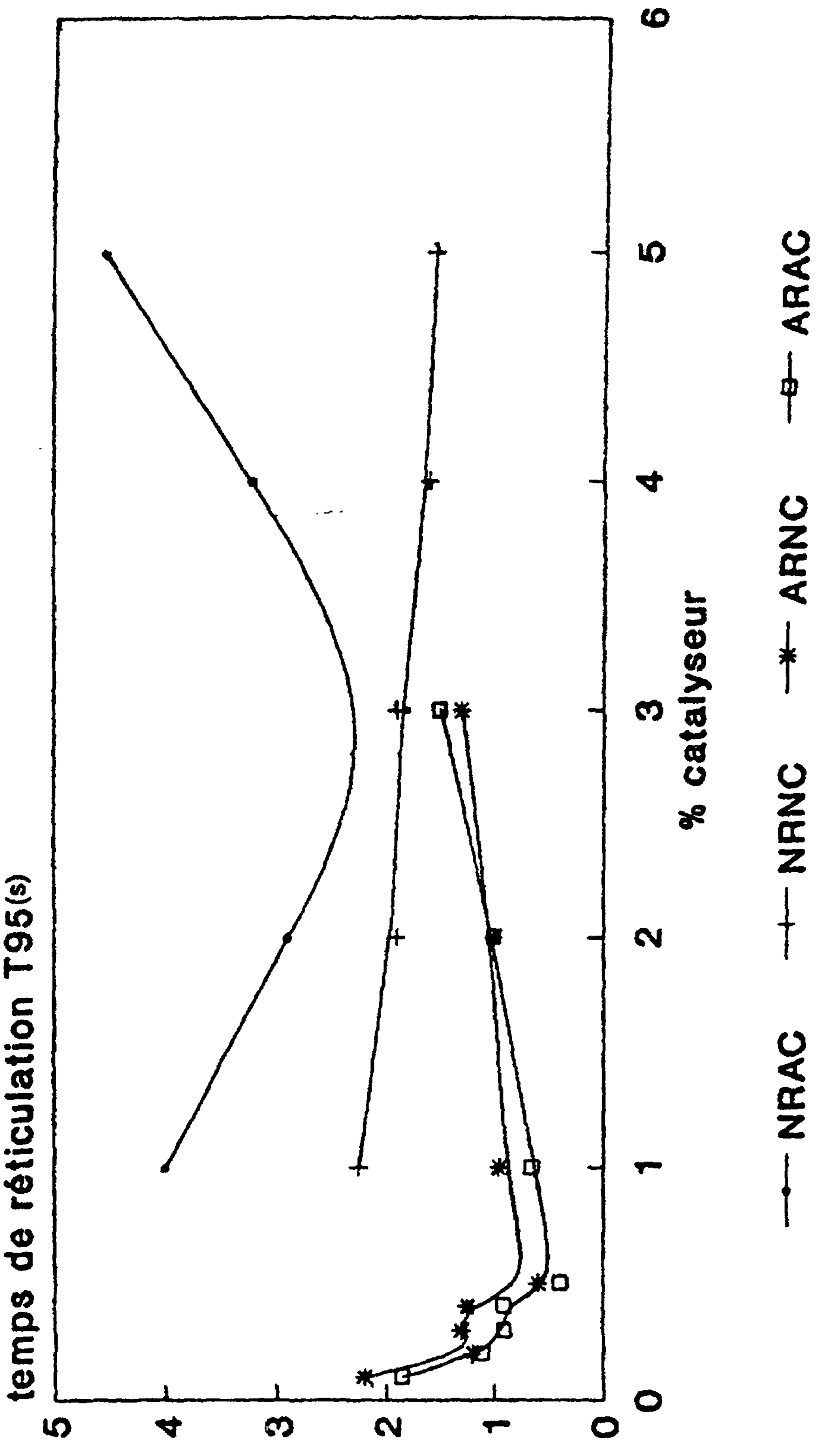
temps de réticulation T95(s)
5
4
3
2
1
0
0
1
2
3
4
5
6
% catalyseur
NRAC
NRNC
ARNC
ARAC

FIG.1

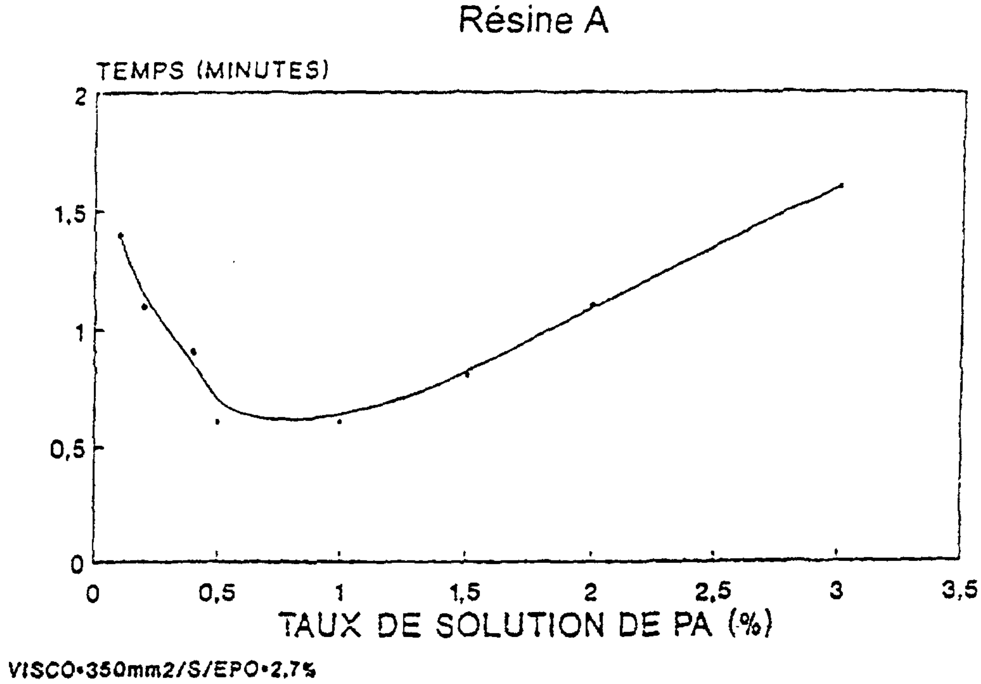
Résine A
TEMPS (MINUTES)
2
1,5
1
0,5
0
0
0,5
1
1,5
2
2,5
3
3,5
TAUX DE SOLUTION DE PA (%)
VISCO•350mm2/S/EPO•2,7%

FIG.2

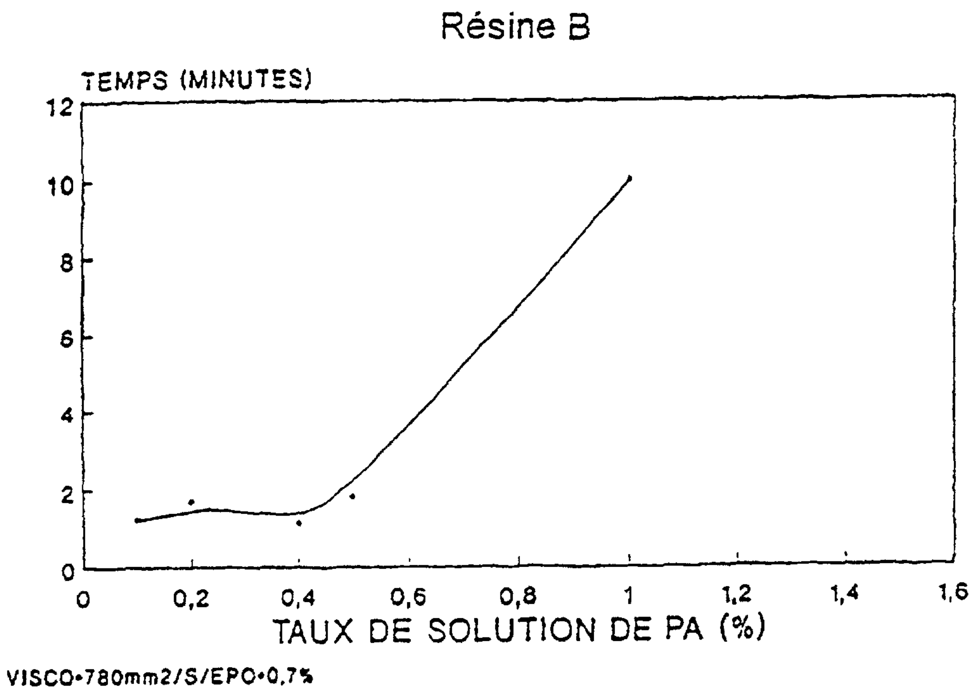
Résine B
TEMPS (MINUTES)
12
10
8
6
4
2
0
0
0,2
0,4
0,6
0,8
1
1,2
1,4
1,6
TAUX DE SOLUTION DE PA (%)
VISCO•780mm2/S/EPO•0,7%

FIG.3

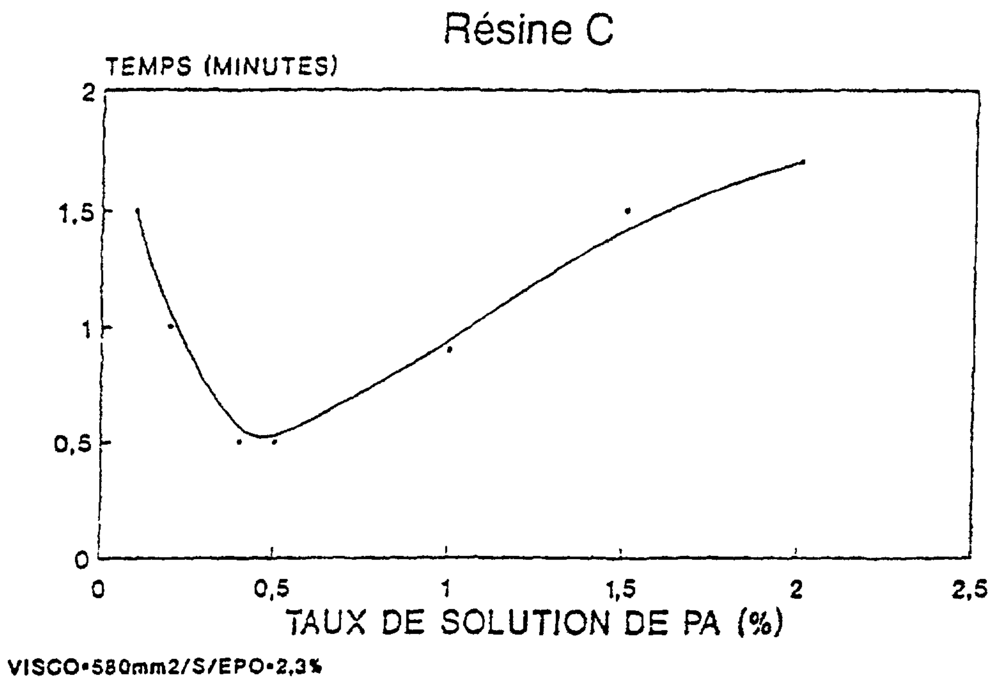
Résine C
TEMPS (MINUTES)
2
1,5
1
0,5
0
0
0,5
1
1,5
2
2,5
TAUX DE SOLUTION DE PA (%)
VISCO=580mm2/S/EPO=2,3%

FIG.4

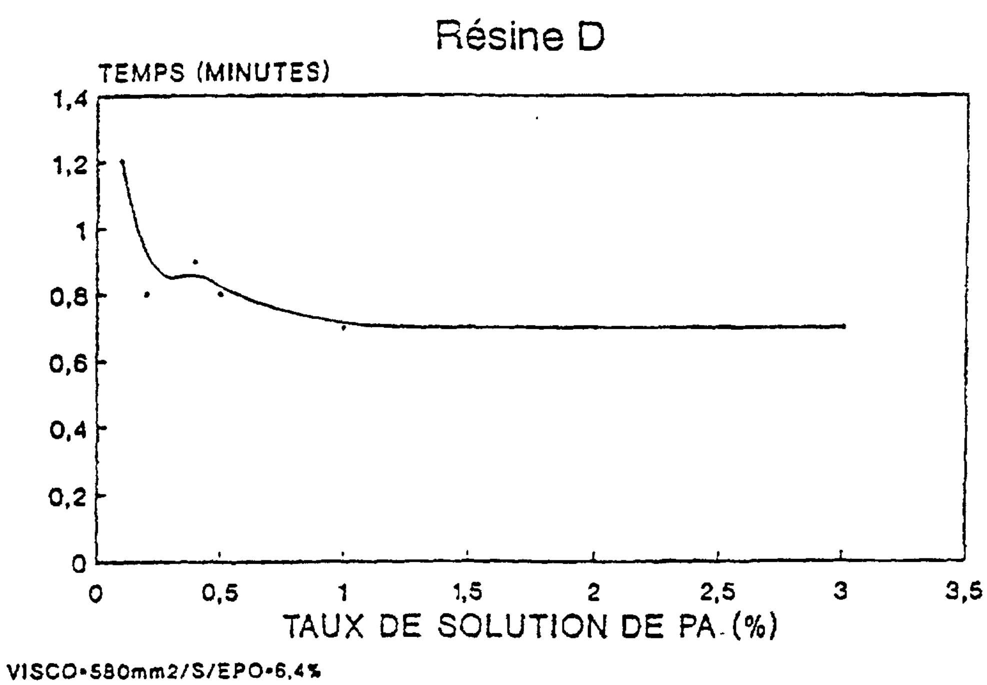
Résine D
TEMPS (MINUTES)
1,4
1,2
1
0,8
0,6
0,4
0,2
0
0
0,5
1
1,5
2
2,5
3
3,5
TAUX DE SOLUTION DE PA (%)
VISCO=580mm2/S/EPO=6,4%

FIG.5